(19)

Europäisches
Patentamt
European
Patent Office
Office européen
des brevets

(11) **EP 2 926 593 B1**

(12) **EUROPEAN PATENT SPECIFICATION**

(45) Date of publication and mention
of the grant of the patent:
**22.02.2017 Bulletin 2017/08**

(21) Application number: **13801913.8**

(22) Date of filing: **18.11.2013**

(51) Int Cl.:
***H04W 36/22*** *(2009.01)*

(86) International application number:
**PCT/SE2013/051346**

(87) International publication number:
**WO 2014/084773 (05.06.2014 Gazette 2014/23)**

(54) **EXPANDING OR SHRINKING A COVERAGE AREA OF A CELL**

AUSDEHNUNG ODER BEGRENZUNG DES ABDECKUNGSBEREICHS EINES MOBILTELEFONS

AUGMENTATION OU RÉDUCTION D'UNE ZONE DE COUVERTURE D'UNE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2012 US 201261731542 P**

(43) Date of publication of application:
**07.10.2015 Bulletin 2015/41**

(73) Proprietor: **Telefonaktiebolaget LM Ericsson
(publ)
164 83 Stockholm (SE)**

(72) Inventors:
• **MILITANO, Francesco
SE-112 51 Stockholm (SE)**
• **TEYEB, Oumer
S-177 44 Solna (SE)**
• **CÖSTER, Rickard
S-126 78 Hägersten (SE)**
• **HUANG, Vincent
S-191 50 Sollentuna (SE)**

(56) References cited:
**WO-A1-2009/002252     WO-A2-2013/060807**

• **ISMAIL GUVENC ET AL: "Range Expansion and
Inter-Cell Interference Coordination (ICIC) for
Picocell Networks", VEHICULAR TECHNOLOGY
CONFERENCE (VTC FALL), 2011 IEEE, IEEE, 5
September 2011 (2011-09-05), pages 1-6,
XP032029347, DOI:
10.1109/VETECF.2011.6092863 ISBN:
978-1-4244-8328-0**
• **Shi-Sheng Sun ET AL: "Traffic Offloading with
Rate-Based Cell Range Expansion Offsets in
Heterogeneous Networks", Proceedings of IEEE
Wireless Communications and Networking
Conference (WCNC 2014), 26 March 2014
(2014-03-26), pages 1-6, XP055111598, Istanbul,
TR Retrieved from the Internet:
URL:http://www.iis.sinica.edu.tw/papers/ch
enwt/17001-F.pdf [retrieved on 2014-04-02]**

EP 2 926 593 B1

**Description**

TECHNICAL FIELD

The present disclosure relates generally to a method and a network node of a serving cell, for configuring a user equipment served by the serving cell with a set of values of an offset parameter for triggering handover towards a neighbor cell. The present disclosure also relates to the user equipment and a method for using the set of values of the offset parameter, the set being received from the network node. The present disclosure also relates to computer programs which cause a processor to carry out these methods. Each of the computer programs may be stored in a computer-readable storage medium.

BACKGROUND

Communication devices such as terminals are also known as e.g. User Equipments (UE), mobile terminals, wireless terminals and/or mobile stations. Terminals are enabled to communicate wirelessly in a cellular communications network or wireless communication system, sometimes also referred to as a cellular radio system or cellular networks. The communication may be performed e.g. between two terminals, between a terminal and a regular telephone and/or between a terminal and a server via a Radio Access Network (RAN) and possibly one or more core networks, comprised within the cellular communications network.

Terminals may further be referred to as mobile telephones, cellular telephones, laptops, or surf plates with wireless capability, just to mention some further examples. The terminals in the present context may be, for example, portable, pocket-storable, hand-held, computer-comprised, or vehicle-mounted mobile devices, enabled to communicate voice and/or data, via the RAN, with another entity, such as another terminal or a server.

The cellular communications network covers a geographical area which is divided into cell areas, wherein each cell area being served by an access node such as a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the terminals within range of the base stations. In the context of this disclosure, the expression Downlink (DL) is used for the transmission path from the base station to the mobile station. The expression Uplink (UL) is used for the transmission path in the opposite direction i.e. from the mobile station to the base station.

In 3rd Generation Partnership Project (3GPP) Long Term Evolution (LTE), base stations, which may be referred to as eNodeBs or even eNBs, may be directly connected to one or more core networks.

3GPP LTE radio access standard has been written in order to support high bitrates and low latency both for uplink and downlink traffic. All data transmission is in LTE controlled by the radio base station.

In this disclosure, the terms base station, eNodeB, eNB and network node are used interchangeably and they all represent a node of a wireless or cellular network which node is capable of communicating with wireless UEs over radio channels. Further, the term UE is used here to represent any terminal or device capable of communicating with the above node over radio channels.

The disclosure is related to cellular networks, focusing primarily on 3G/UMTS/WCDMA/HSPA and 4G/EPS/LTE/LTE-A. Furthermore, embodiments described in this disclosure may be used for improving the Quality of Experience (QoE) for an end-user and/or improving the resource usage, primarily the usage of radio resources, in a cellular network, which may also referred to as a Radio Access Network, based on service awareness related information.

WO 2009/002252 A1 discloses a known device and method for transmitting cell offset in a communication network.

Cellular network standards, such as the 3GPP family of standards, employ the Quality of Service (QoS) paradigm for differentiation of different services, so that services with strict requirements on e.g. bit rate and/or latency may either be guaranteed the desired transmission characteristics or receive a high relative priority, so that their chances of experiencing appropriate transmission characteristics increase.

In present cellular networks many Internet Protocol, IP, based, services and applications that are commonly used by end-users are so-called Over-The-Top (OTT) services, implying that they are accessed across the Internet and outside the immediate control of the operator of the cellular network. As a bearer established for plain Internet access is typically a so-called "best-effort" bearer, the service flows using such a bearer may often be treated in a less than optimal manner, potentially resulting in poor QoE and unsatisfied end-users.

To enable special treatment of OTT service flows, cellular network operators may employ Deep Packet Inspection (DPI) in the user plane, typically at the entry of the core networks, in order to detect flows for which some special treatment is desired, e.g., providing a certain QoS or employ rate shaping. By looking into the packet headers, it is possible to identify the most commonly used services/applications, e.g., FTP, Skype, streaming, etc..., and assign the appropriate QoS treatment, scheduling, buffer allocations, etc..., to satisfy the demands of these services/applications.

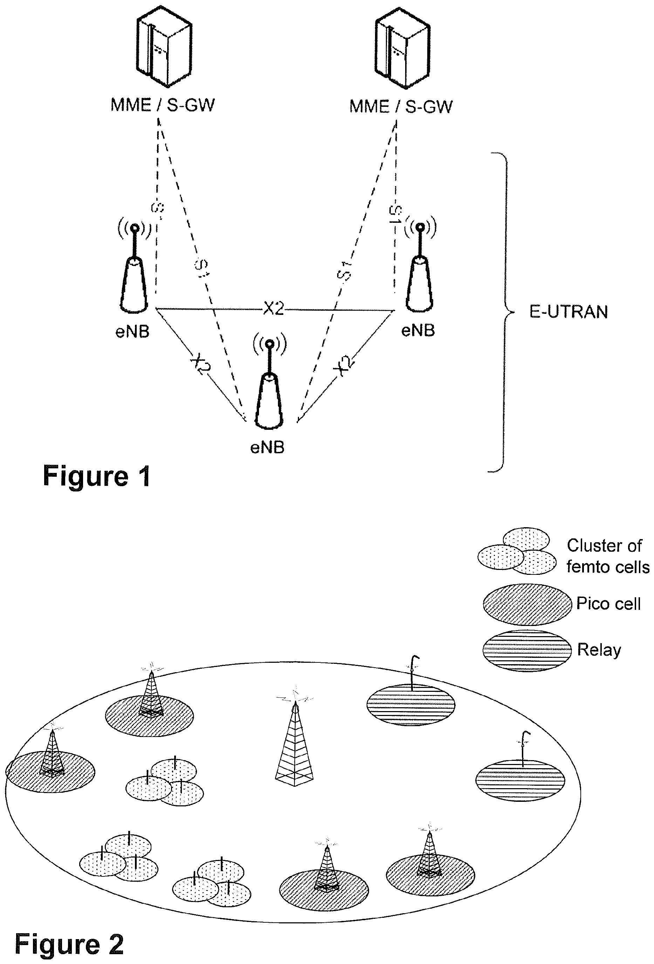

LTE is thus based on a rather flat architecture compared to 2G and 3G systems. In LTE, each cell is served by an eNodeB or eNB, which both can be generally called "base station", and handovers between cells can be handled either via the Mobility Management Entity (MME) and the S1 interface, or directly between the eNBs via the X2 interface. This is illustrated in **Figure 1.**

In a cellular networks, there will typically be areas with high traffic, i.e. high concentration of users, e.g., user equipments. In those areas, it would be desirable to deploy additional capacity to ensure user satisfaction. The added capacity could then be in the form of an additional macro base station or to deploy nodes with lower output power and thus covering a smaller area in order to concentrate the capacity boost on a smaller area. In this context, a relatively small cell located at least partly inside a larger cell is typically called a pico cell and the larger cell is called a macro cell, which terminology will be used in this description for illustrative purposes even though such cells can have other names as well.

There will also typically be areas with bad coverage where there is a need for coverage extension, and one way to do that is again to deploy a node with low output power, e.g. to create a pico cell, to concentrate the coverage boost in a small area.

One argument for choosing nodes with lower output power in the above cases is that the impact on the network including the macro cell can be minimized, e.g. it is a smaller area where the macro cell and the network may experience interference.

Currently there is a strong drive in the industry in the direction towards the use of low power nodes. The different terms used for this type of network deployments are Heterogeneous networks, multilayer networks or, shortly, HetNets.

**Figure 2** illustrates a heterogeneous network comprising a macro base station, e.g., the high tower depicted in the Figure, which provides a wide area coverage, also called macro cell. It also shows low power nodes that are deployed to provide small area capacity/coverage. In this example, pico base stations, relays and home base stations, e.g., femto cells, are shown. Although the figure shows clusters of femto cells single cell deployments may also be used.

Since different cells are operated with different pilot power levels, there can be imbalances between uplink and downlink in the network. The reason is that cells are typically selected based on received signal strength, which means that UEs are served by the best downlink cell alternative. However, the uplink depends mainly on the distance between the UE and the serving site, i.e., independent of the pilot power. This means that with cell selection based on the downlink pilot, UEs may have a better uplink to a non-serving site.

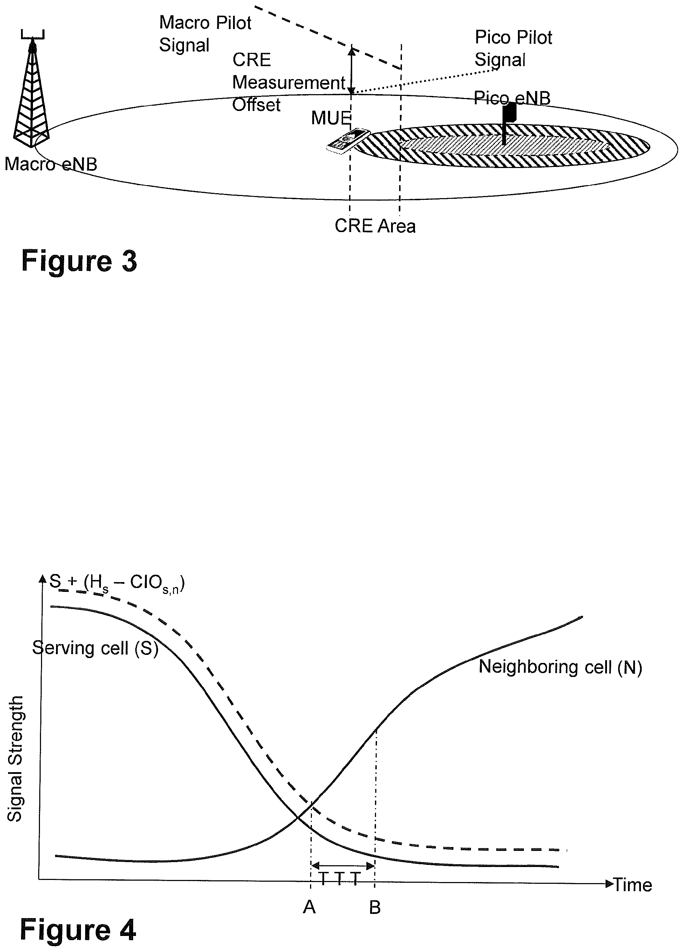

In such cases, another solution called Cell Range Extension (CRE) may be used. According to this solution, the Macro UE (MUE) is configured by the Macro eNB to be able to detect cells that are further away and that normally would not be detected. Typically these cells comprises those with a pilot signal lower than 6 deciBels (dBs) from the pilot signal of the macro cell, although recent progress in 3GPP is focusing on the possibility of detection for pilot signals up to 9dB lower than the serving pilot signal. The extended area within which the MUE can detect small cells with pilot signals below such threshold is called the CRE of the small cell. In order to detect neighbour cells with such pilot signals strength, the MUE will need to be configured by Macro eNB with a specific measurement Offset, as illustrated in **Figure 3.**

Once such cells are detected by the MUE and reported to the Macro eNB, the Macro eNB can decide to handover the MUE to the detected small cell. Such handover might be preceded by allocation of so called Almost Blank Subframes (ABS) by the Macro eNB, see 3GPP TS 36.331 and TS 36.423-b60, chapter 8.3.1.2; 9.2.54 and 9.2.58. ABSs are "protected subframes", namely subframes where the Macro eNB limits its transmission. Therefore, a small cell neighbouring the Macro eNB will experience reduced interference on such ABS subframes.

Once the MUE is handed over to the CRE of the small cell, the small cell eNB may decide to serve the UE on ABSs, due to the otherwise high DL interference the UE would experience from the Macro eNB. Further, the UE should be configured by the small cell eNB so to measure neighbouring cells on ABSs. This will ensure that the measurements are not impacted by high levels of macro DL interference.

Recently, a new concept has been introduced in 3GPP, which is similar to the ABS concept. This is called Reduced Power SubFrames (RPSF) using subframes where the Macro eNB will schedule data traffic for MUEs at a reduced transmit (Tx) power. The RPSF concept differs from the ABS concept in that no data traffic is supposed to be transmitted on ABS subframes, although the latter rule is not mandated by standardization.

The LTE system has been developed in such a way that reliable communication is possible even with low signal to noise level ratios, e.g. Signal to Interference Ratio (SIR), which makes it possible to deploy networks with a frequency reuse factors of 1, i.e., with neighbouring cells using the same frequency. However, a frequency reuse of 1 still implies that UEs near cell edges typically experience more interference as compared to cell centre UEs. As such, co-ordination of the scheduling between neighbouring cells is very beneficial to ensure that even cell edge UEs will get a fair share of the overall cell capacity. For example, neighbouring cells can opt to use a frequency reuse of 1 only for UEs located in their central region and apply scheduling restrictions so that they do not use the same frequency resources for UEs located in their cell borders, basically creating a partial frequency reuse in the cell border areas.

Inter-cell Interference Co-ordination (ICIC) is a mechanism by which cells consider the interference from and to neighbouring cells in their scheduling decisions. Since the eNBs are fully responsible for their scheduling decisions, i.e., no higher level entity like Radio Network Controller (RNC) in Universal Mobile Telecommunications System (UMTS) for performing scheduling, ICIC requires some messages to communicate scheduling and interference situations between neighbouring eNBs. 3GPP has already specified X2 messages for facilitating this, TS 36.423-b60, chapter 9.1.2.

For ICIC in the UL direction, two X2 Information Elements (IEs) are available as part of the X2: LOAD INFORMATION message:

UL High Interference Indicator (HII). This is an IE that may be sent by an eNB to its neighbours to inform them about the UL Physical Resource Blocks (PRBs) that it is planning to grant to its cell edge UEs, in the UL, in the near future. The eNBs response on receiving this message is left up to implementation, but one possible reaction could be to refrain, for a certain duration, from granting the PRBs indicated as interference sensitive in the HII to their cell edge UEs, as those PRBs are expected to experience strong UL interference from the cell edge UEs of the neighbour eNB that sent out the HII message.

UL Interference Overload Indicator (OI): This IE indicates the UL interference level experienced by a cell on each UL PRBs. Therefore this IE will be typically sent by an eNB victim of UL interference to an eNB acting as interference aggressor. For each PRB, the level of interference can be assigned to low, medium or high. The response to receiving the OI IE is also left up to implementation, but a possible reaction could be for a neighbour to schedule more on the PRBs reported to experience low level of interference and less on the PRBs experiencing high levels of interference until the situation is resolved, for example, neighbour sends out another OI indicating there are few or no PRBs experiencing high interference.

Both OI and HII can be communicated between neighbouring as often as every 20 milliseconds (ms).

For the DL, an X2 parameter, or IE, called the Relative Narrowband Transmit Power (RNTP) indicator has been defined as part of the X2: LOAD INFORMATION message. The RNTP includes a bitmap, where each bit, corresponding to each PRB, indicates whether the eNB is planning to keep the transmit power of the PRB below a certain threshold, known as RNTP threshold, which is also included in the RNTP message. A bitmap value of "0" can be considered as a promise by the eNB not to use a power level higher than the RNTP threshold. The promise is expected to be kept by the cell until a future RNTP message tells otherwise.

Similar to the reception of the OI and the HII, the eNBs response to RNTP is left up to implementation. One possible reaction could be for the eNB to avoid scheduling cell edge UEs in the DL on those PRBs expected to be allocated high transmission power by the reporting neighbour, as they are likely to be the ones to be scheduled to the cell edge UEs of the reporting neighbour.

Thus the RNTP can be considered as the DL equivalent of the UL HII, but with more information, since the HII does not provide any thresholds, as it provides the relative interference to be experienced at particular PRBs.

UEs can be configured to report measurements, mainly for the sake of supporting mobility. As specified in 3GPP TS 36.331- chapter 6.2, the E-UTRAN provides the measurement configuration applicable for a UE in RRC_CONNECTED by means of dedicated signalling, i.e. using the RRCConnectionReconfiguration message. The following measurement configurations can be signalled to the UE:

1. **Measurement objects:** These define on what the UE should perform the measurements - such as a carrier frequency. The measurement object may also include a list of cells to be considered, white-list or black-list, as well as associated parameters, e.g., frequency- or cell-specific offsets.

2. **Reporting configurations:** These consist of the periodic or event-triggered criteria which cause the UE to send a measurement report, as well as the details of what information the UE is expected to report, e.g. the quantities, such as Received Signal Code Power (RSCP) for UMTS or Reference Signal Received Power (RSRP) for LTE, and the number of cells.

3. **Measurement identities:** These identify a measurement and define the applicable measurement object and reporting configuration. Each measurement identity links one measurement object with one reporting configuration. By configuring multiple measurement identities it is possible to link more than one measurement object to the same reporting configuration, as well as to link more than one reporting configuration to the same measurement object. The measurement identity is used as a reference number in the measurement report.

4. **Quantity configurations:** The quantity configuration defines the filtering to be used on each measurement. One quantity configuration is configured per RAT type, and one filter can be configured per measurement quantity.

5. **Measurement gaps:** Measurement gaps define time periods when no UL or DL transmissions will be scheduled, so that the UE may perform the measurements, e.g., inter-frequency measurements where the UE has only one Transmission/Reception (Tx/Rx) unit and supports only one frequency at a time. The measurement gaps are common for all gap-assisted measurements.

The E-UTRAN configures only a single measurement object for a given frequency, but more than one measurement identity may use the same measurement object. The identifiers used for the measurement object and reporting configuration are unique across all measurement types. It is possible to configure the quantity which triggers the report (RSCP or RSRP) for each reporting configuration.

In LTE, the most important measurement metrics used are the Reference Signal Received Power (RSRP) and Reference Signal Received Quality (RSRQ). RSRP is a cell specific measure of signal strength and it is mainly used for ranking different cells for handover and cell reselection purposes, and it is calculated as the linear average of the power of the Resource Elements (REs) which carry cell-specific Reference Signals (RSs). The RSRQ, on the other hand, also takes the interference into consideration by taking the total received wideband power into account as well.

One of the measurement configuration parameters that UEs receive from their serving eNBs is the S-measure, which tells the UE when to start measuring neighbouring cells. If the measured RSRP of the serving cell falls below the S-measure, indicating the signal of the serving cell is not that strong anymore, the UE starts measuring the signal strength of RSs from the neighbouring cells. The S-measure is an optional parameter and different S-measure values can be specified for initiating intra-frequency, inter-frequency and inter-RAT measurements.

Once the UE is enabled for measuring, it can report any of the following:

- The serving cell

- Listed cells, i.e. cells indicated as part of the measurement object;

- Detected cells on a listed frequency, i.e., cells which are not listed cells but are detected by the UE.

There are several measurement configuration parameters that specify the triggering of measurement reports from the UE. The following event-triggered criteria have been specified for intra-RAT measurement reporting in LTE:

- Event A1: Primary serving cell (PCell) becomes better than absolute threshold.

- Event A2: PCell becomes worse than absolute threshold.

- Event A3: Neighbour cell becomes better than an offset relative to the PCell.

- Event A4: Neighbour cell becomes better than absolute threshold.

- Event A5: PCell becomes worse than one absolute threshold and neighbour cell becomes better than another absolute threshold.

- Event A6: Neighbour cell becomes better than an offset relative to a Secondary Cell (SCell)

For inter-RAT mobility, the following event-triggered reporting criteria have been specified:

- Event B1: Neighbour cell becomes better than absolute threshold.

- Event B2: Serving cell becomes worse than one absolute threshold and neighbour cell becomes better than another absolute threshold.

The most widely used measurement report triggering event related to handover from a serving cell to a neighbour cell is the above event A3, and its usage is illustrated in **Figure 4.** The triggering conditions for event A3 can be formulated as:

$$N > S + HOM \qquad (1)$$

where N and S denote signal strengths of the neighbour and serving cells, respectively, and HOM is the handover margin. HOM is the difference between the radio quality of the serving cell and the radio quality needed before attempting a handover. The radio quality is measured either using RSRP or RSRQ, see 3GPP 36.133, c10 chapter 8.1.2.7.3 and 8.1.2.8.3.2.1 for further explanation.

The UE triggers the intra-frequency handover procedure by sending event A3 report to the eNB. This event occurs when the UE measures that the target cell is better than the serving cell with a margin "HOM". The UE is configured over Radio Resource Control (RRC) when entering a cell and the HOM is calculated from the following configurable parameters:

$$HOM = Ofp + Ocp + Off - Ofn - Ocn + Hys \qquad (2)$$

where:

- **Ofp** is the frequency specific offset of the primary frequency, i.e., offsetFreq as defined within measObjectEUTRA corresponding to the primary frequency.

- **Ofn** is the frequency specific offset of the frequency of the neighbour cell, i.e., offsetFreq as defined within measObjectEUTRA corresponding to the frequency of the neighbour cell.

- **Ocp** is the cell specific offset of the PCell, i.e., cellIndividualOffset (CIO) as defined within measObjectEUTRA corresponding to the primary frequency, and is set to zero if not configured for the PCell.

- **Ocn** is the cell specific offset of the neighbour cell, i.e., cellIndividualOffset as defined within measObjectEUTRA corresponding to the frequency of the neighbour cell, and set to zero if not configured for the neighbour cell.

- **Hys** is the hysteresis parameter for this event, i.e., hysteresis as defined within reportConfigEUTRA for this event.

- **Off** is the offset parameter for this event, i.e., a3-Offset as defined within reportConfigEUTRA for this event.

- **Mn, Mp** are expressed in dBm in case of RSRP, or in dB in case of RSRQ.

- **Ofn, Ocn, Ofp, Ocp, Hys, Off** are expressed in dB.

If the condition in (1) is satisfied and it remains valid for a certain duration known as Time To Trigger (TTT), as indicated in Figure 4, the UE sends a measurement report to the serving eNB, in Figure 4, event A3 is satisfied at point A and measurement report is sent at point B in time after TTT. When the serving eNB receives the measurement report, it can initiate a handover towards the neighbour cell.

In addition to event-triggered reporting, the UE may be configured to perform periodic measurement reporting. In this case, the same parameters may be configured as for event-triggered reporting, except that the UE starts reporting periodically rather than only after the occurrence of an event.

Note that the handover measurement configuration parameters are set individually to each UE via dedicated RRC messaging, i.e., they can be unique for each UE. Also, different configuration parameters can be set for different neighbour cells.

Handover is widely used in any mobile or cellular communication system, where the system tries to assure service continuity of the UE by transferring the UE's connection from one cell to another depending on several factors such as signal strength, load conditions, service requirements, etc. The provision of efficient/effective handovers, e.g., minimum number of unnecessary handovers, minimum number of handover failures, minimum handover delay, etc., would affect not only the Quality of Service (QoS) of the end user but also the overall mobile network capacity and performance.

In LTE, UE-assisted, network controlled handover is typically utilized, see 3GPP TS 36.300-b70, chapters 10.1.2.1; 10.2.2 and 19.2.1.4.1. The networks, typically a serving base station, configures the UE to send measurement reports and based on these reports the UE is moved, if required and possible, to the most appropriate cell that will assure service continuity and quality. A UE measurement report configuration consists of the reporting criteria, whether it is periodic or event triggered, as well as the measurement information that the UE has to report.

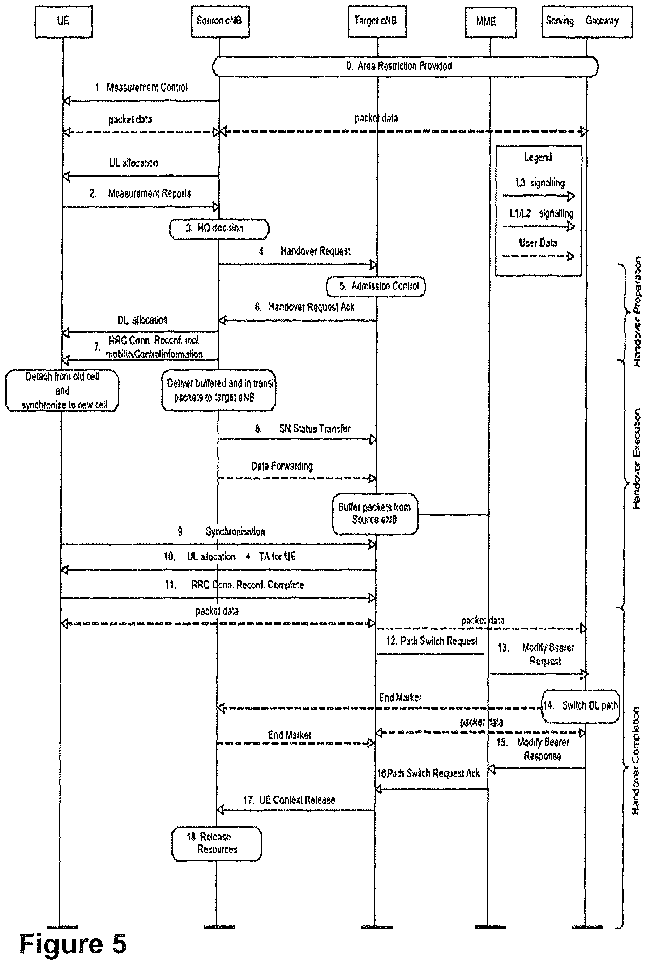

Handover signaling in the network may be performed via the X2 connection, whenever available, and if not available, the S1 interface involving the Core Network (CN) can be used. A typical X2 Handover procedure is shown in Figure 5. The handover procedure can be sub-divided into three stages denoted preparation, i.e., initiation, execution and completion.

Based on the measurement results, the source eNB is getting from the UE, the source eNB decides whether to handover the connection to another eNB or not, steps 1 to 3 in Figure 5. Then handover preparation stage, steps 4 to 7 of Figure 5, is entered and the decision to handover is communicated to the target eNB, and if the target eNB is able to admit the UE, a message is sent to the UE to initiate the handover, RRC conn. Reconf. Including mobilitycontrolinfo. During the handover execution stage, steps 7 to 11 of Figure 5, DL data arriving at the source eNB for the UE are forwarded to the target eNB. The UE synchronizes with the target eNB and send towards it the handover confirmation message, RRC Conn. Reconf. Complete, signifying that from the UE's point of view the handover is complete. During the handover completion phase, steps 12 and thereafter, a proper setup of the connection with the target eNB is performed, which include the switching of the DL path in the serving gateway, the old connection is released and any remaining data in the source eNB that is destined for the UE is forwarded to the target eNB. Then normal packet flow can ensue through the target eNB.

SUMMARY

It is an object of embodiments herein to improve the performance in a cellular network by providing an improved way to handle handover.
According to a first aspect of embodiments herein, the object is achieved by a method performed by a network node of a serving cell. The method is for configuring a user equipment served by the serving cell with a set of values of an offset parameter for triggering handover towards a neighbor cell. The network node and the user equipment operate in a cellular network. The network node configures the user equipment with the set of values of the offset parameter, depending on an uplink-downlink traffic ratio of the user equipment. The set of values of the offset parameter is to expand or shrink a coverage area of the one of the serving cell and the neighbor cell that is a smaller cell.
According to a second aspect of embodiments herein, the object is achieved by a method performed by the user equipment. The method is for using the set of values of the offset parameter, the set being received from the network node. The user equipment is served by the serving cell of the network node. The network node, the serving cell, and the user equipment operate in the cellular network. The user equipment receives from the network node the set of values of the offset parameter for triggering handover towards the neighbor cell. The set of values of the offset parameter is to expand or shrink the coverage area of the one of the serving cell and the neighbor cell that is the smaller cell, depending on an uplink-downlink traffic ratio of the user equipment. The neighbour cell operates in the cellular network. The user equipment uses the received set of values of the offset parameter to expand or shrink the coverage area of the one of the serving cell and the neighbor cell that is the smaller cell, depending on the uplink-downlink traffic ratio distribution of the user equipment.
According to a third aspect of embodiments herein, the object is achieved by the network node of the serving cell. The network node is adapted to configure the user equipment served by the serving cell with the set of values of the offset parameter. This is for triggering handover towards the neighbor cell. The network node and the user equipment are adapted to operate in the cellular network. The network node comprises a configuring unit adapted to configure the user equipment with the set of values of the offset parameter, depending on an uplink-downlink traffic ratio of the user equipment. The set of values of the offset parameter are to expand or shrink the coverage area of the one of the serving cell and the neighbor cell that is the smaller cell.
According to a fourth aspect of embodiments herein, the object is achieved by the user equipment. The user equipment is adapted to use the set of values of the offset parameter. The set is received from the network node. The user equipment is served by the serving cell of the network node. The network node, the serving cell, and the user equipment are adapted to operate in the cellular network. The user equipment comprises a receiving circuit adapted to receive from the network node the set of values of the offset parameter for triggering handover towards the neighbor cell. The set of values of the offset parameter are to expand or shrink the coverage area of the one of the serving cell and the neighbor cell that is the smaller cell, depending on an uplink-downlink traffic ratio of the user equipment. The neighbour cell operates in the cellular network. The user equipment also comprises a using circuit. The using circuit is adapted to use the received set of values of the offset parameter to expand or shrink the coverage area of the one of the serving cell and the neighbor cell that is the smaller cell, depending on the uplink-downlink traffic ratio distribution of the user equipment.
According to a fifth aspect of embodiments herein, the object is achieved by a computer program comprising instructions. The instructions, when executed on at least one processor, cause the at least one processor to carry out the method performed by the network node.
According to a sixth aspect of embodiments herein, the object is achieved by a computer program comprising instructions. The instructions, when executed on at least one processor, cause the at least one processor to carry out the method performed by the user equipment.
According to a seventh aspect of embodiments herein, the object is achieved by a computer-readable storage medium. The computer-readable storage medium has stored thereon the computer program comprising the instructions that, when executed on at least one processor, cause the at least one processor to carry out the method performed by the network node.

According to an eighth aspect of embodiments herein, the object is achieved by a computer-readable storage medium. The computer-readable storage medium has stored thereon the computer program comprising the instructions that, when executed on at least one processor, cause the at least one processor to carry out the method performed by the user equipment.

By configuring the user equipment with the set of values of the offset parameter, depending on an uplink-downlink traffic ratio of the user equipment, the network node may make optimal offloading decisions. By shrinking the coverage area of the smaller cell of the user equipment when it has a heavy DL traffic, the probability of the user equipment staying connected to the larger, e.g., macro, cell is increased, where the UE may have a better DL connection. Similarly, by expanding the coverage area of the smaller cell of the user equipment when it has a heavy UL traffic, the probability of the user equipment being offloaded to the smaller, e.g., pico layer is increased, where it may get the best UL performance, instead of using higher power to transmit to a far away e.g., macro cell and creating more interference on the UL reception of the user equipments connected to the smaller, e.g., pico layer.

Further advantages of some embodiments disclosed herein are discussed further down below.

BRIEF DESCRIPTION OF THE DRAWINGS

Examples of embodiments herein are described in more detail with reference to the accompanying drawings, in which:

Figure 1 illustrates a communication scenario of a typical LTE network.
Figure 2 illustrates a scenario of an example of a heterogeneous network.
Figure 3 illustrates how a UE measures signals from a macro eNB and from a pico eNB.
Figure 4 is a diagram illustrating how handover is initiated.
Figure 5 is a signalling diagram of a typical handover procedure.
Figure 6 is a schematic block diagram illustrating embodiments in a cellular network.
Figure 7 is a flowchart illustrating embodiments of a method in a network node.
Figure 8 is a flowchart illustrating embodiments of a method in a user equipment.
Figure 9 is a block diagram illustrating an example of a network node in more detail.
Figure 10 is a block diagram illustrating an example of a user equipment in more detail.

DETAILED DESCRIPTION

As part of the solution according to embodiments herein, one or more problems that may be associated with use of at least some of the prior art solutions will first be identified and discussed.

As discussed above, the offsets and/or thresholds that may determine the handover measurement report triggering may be set on a per UE basis via dedicated RRC measurement report configuration, and the settings could be per individual or group of neighboring cells.

Currently, the usual practice is to set the offsets that determine the CRE region mainly depending on the current traffic load in the macro layer, i.e., one or more macro cells. For example, in a highly loaded macro layer where there is a great need for offloading some of the UEs in the macro layer towards the pico layer, i.e., to one or more pico cells, it may be beneficial to assign higher CRE offsets to ensure that enough UEs may be served by the pico cells. However, such a decision without considering the UE's activity and anticipated traffic might be sub optimal because the benefit that the UE and/or network may get from offloading may be highly dependent on the traffic asymmetry, i.e., the ratio between UL and DL traffic.

In this disclosure, embodiments herein are provided that make optimal offloading decisions based on the UL/DL traffic split at the UE.

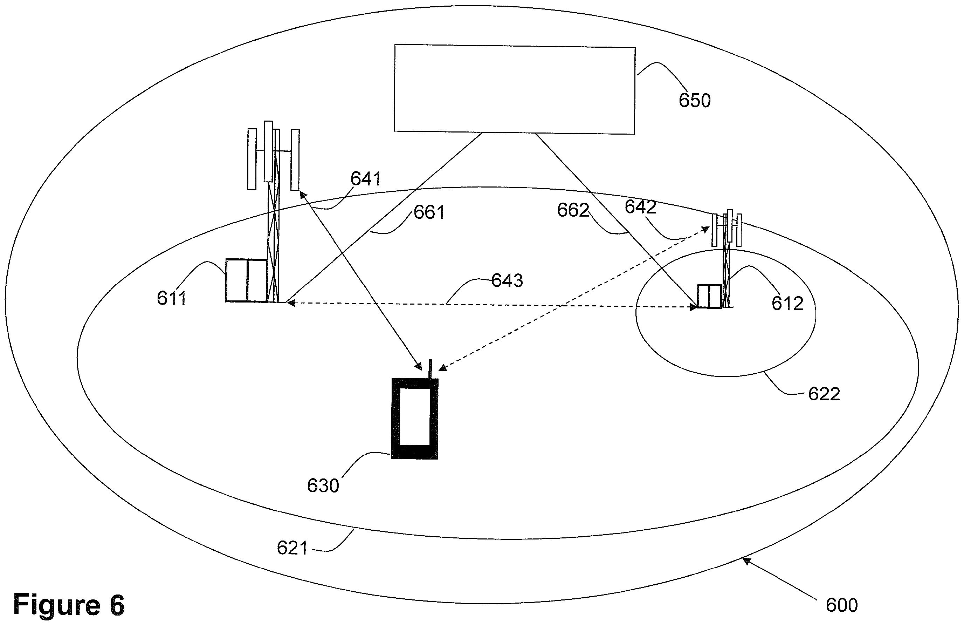

**Figure 6** depicts a **cellular network 600**, in which embodiments herein may be implemented. The wireless cellular network 600 may for example be a network such as a LTE, e.g. LTE Frequency Division Duplex (FDD), LTE Time Division Duplex (TDD), LTE Half-Duplex Frequency Division Duplex (HD-FDD), Wideband Code Division Multiple Access (WCDMA), Universal Terrestrial Radio Access (UTRA) TDD, Global System for Mobile communications (GSM) network, GSM/Enhanced Data Rate for GSM Evolution (EDGE) Radio Access Network (GERAN) network, EDGE network, network comprising of any combination of Radio Access Technologies (RATs) such as e.g. Multi-Standard Radio (MSR) base stations, multi-RAT base stations etc., any 3GPP cellular network, Worldwide Interoperability for Microwave Access (WiMax), or any cellular network or system. The cellular network 600 may be a heterogeneous network, or a homogeneous network.

The cellular network 600 comprises a **network node 611**, and may also comprise **a neighbor network node**

**612.** Each of the network node 611 and the neighbor network node 612 may be a base station such as e.g. an eNB, eNodeB, or a Home Node B, a Home eNode B, femto Base Station, BS, pico BS or any other network unit capable to serve a wireless device or a machine type communication device in a cellular network 600. In some particular embodiments, each of the network node 611 and the neighbor network node 612 may be a stationary relay node or a mobile relay node. The cellular network 600 covers a geographical area which is divided into cell areas, wherein each cell area is served by a network node, although, one network node may serve one or several cells. In the example depicted in Figure 6, the network node 611 serves a **serving cell 621**, and the neighbor network node 612 serves a **neighbor cell 622.** Each of the network node 611 and the neighbor network node 612 may be e.g. macro eNodeB or BS, home eNodeB or pico base station, based on transmission power and thereby also cell size. Each of the serving cell 621 and the neighbor cell 622 may be a macro cell or a small cell. Examples of small cell may be, for example, a pico cell, a femto cell, a relay cell, etc...In the non-limiting example depicted in Figure 6, the neighbor network node 612 is a small network node, such as a pico node, the network node 611 is a macro node, the neighbor cell 622 is a small cell and the serving cell 621 is a macro cell. Typically, cellular network 600 may comprise more cells similar to 621 and 622, served by their respective network nodes. This is not depicted in Figure 6 for the sake of simplicity. Each of the network node 611 and the neighbor network node 612 may support one or several communication technologies, and its name may depend on the technology and terminology used. In some embodiments, each of the network node 611 and the neighbor network node 612 may have one or more antenna ports. In some particular embodiments, each of the network node 611 and the neighbor network node 612 may have one to four antenna ports. In other embodiments, each of the network node 611 and the neighbor network node 612 may have more than four antenna ports. The network node 611 may communicate with neighbor network node 612 via **a first link 643.**

A number of wireless devices are located in the cellular network 600. In the example scenario of Figure 4, only one wireless device is shown, **user equipment 630.** The user equipment 630 may e.g. communicate with the network node 611 over a **first radio link 641**, and with the neighbor network node 612 over a **second radio link 642.**

The user equipment 630 is a wireless communication device which is also known as e.g. UE, mobile terminal, wireless terminal and/or mobile station. The device is wireless, i.e., it is enabled to communicate wirelessly in the cellular network 600, sometimes also referred to as a cellular radio system or cellular network. The communication may be performed e.g., between two devices, between a device and a regular telephone and/or between a device and a server. The communication may be performed e.g., via a Radio Access Network (RAN) and possibly one or more core networks, comprised within the cellular network 600.

The user equipment 630 may further be referred to as a mobile telephone, cellular telephone, or laptop with wireless capability, just to mention some further examples. The user equipment 630 in the present context may be, for example, portable, pocket-storable, hand-held, computer-comprised, or vehicle-mounted mobile devices, enabled to communicate voice and/or data, via the RAN, with another entity, such as a server, a laptop, a Personal Digital Assistant (PDA), or a tablet computer, sometimes referred to as a surf plate with wireless capability, Machine-to-Machine (M2M) devices, devices equipped with a wireless interface, such as a printer or a file storage device or any other radio network unit capable of communicating over a radio link in a cellular communications system, such as the cellular network 600.

In 3GPP LTE, network nodes, which may be referred to as eNodeBs or even eNBs, may be directly connected to one or more core networks (not depicted). Each of these one or more core networks comprises one or more core network nodes, such as **core network node 650.** Core network node 650 may be for example, a "centralized network management node" or "coordinating node", which is a core network node, which coordinates radio resources with one or more radio network nodes and/or UEs. Some examples of the coordinating node are network monitoring and configuration node, Operations Support System (OSS) node, Operations & Maintenance (O&M) node, Minimization of Drive Tests (MDT) node, Self-Organizing Network (SON) node, positioning node, a gateway node such as Packet Data Network Gateway (P-GW) or Serving Gateway (S-GW) network node or femto gateway node, a Mobility Management Entity (MME) node, a macro node coordinating smaller radio nodes associated with it, etc.

The network node 611 may communicate with core network node 650 via a **second link 661.** The neighbor network node 612 may communicate with core network node 650 via a **third link 662.**

Some embodiments described herein may be used, for example, for the adjustment of the CIO (Cell Individual Offset) values that may be used to expand/shrink the CRE of the pico cells, such as neighbor cell 622, on a per UE, e.g., user equipment 630, basis by considering the UE's UL/DL traffic ratio. Further enhancements are also proposed where the user's profile, e.g. Gold, Silver, Bronze level user or the like, may be used to determine the CIO settings.

Various details of some possible embodiments are discussed below. Note that though the decisions are focused on an LTE system, the embodiments described herein may readily applicable to other RATs such as UMTS and HSPA.

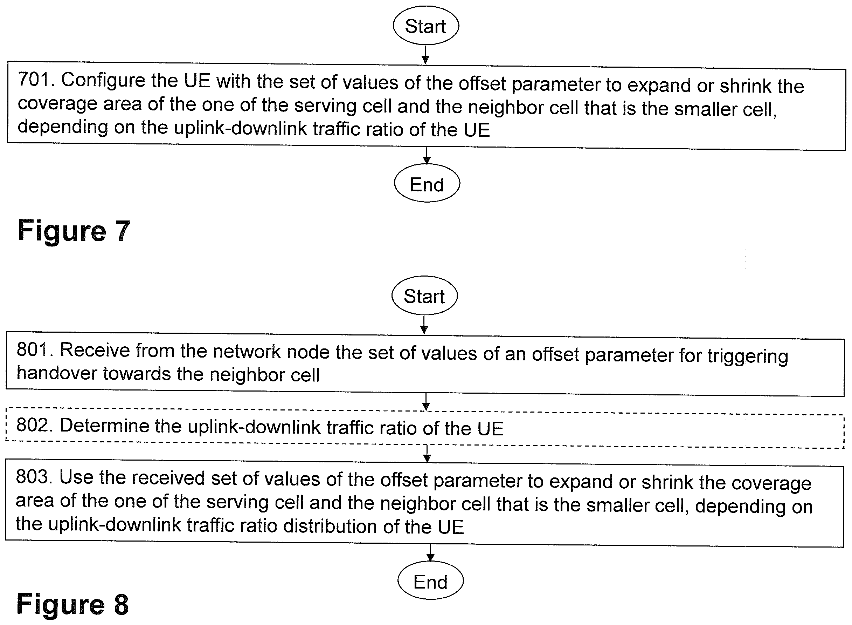

Embodiments of a method performed by the network node 611 of the serving cell 621 for configuring the user equipment 630 served by the serving cell 621 with a set of values of an offset parameter for triggering handover towards the neighbor cell 622, will now be described with reference to the flowchart depicted depicted in **Figure 7.** The network node 611, and the user equipment 630 operate in the cellular network 600. **Figure 7** depicts a flowchart of the action that is or may be performed by the network node 611 in embodiments herein. A continuous line depicts a mandatory action.

**Action 701**

The network node 611 configures the user equipment 630 with the set of values of the offset parameter. The set of values of the offset parameter being to expand or shrink a coverage area of the one of the serving cell 621 and the neighbor cell 622 that is a smaller cell, depending on an uplink-downlink traffic ratio of the user equipment 630.

In some embodiments, the offset parameter is comprised in a handover margin. In these embodiments, the handover margin is of a signal strength or quality of the serving cell 621 towards the neighbor cell 622.

In some of these embodiments, the offset parameter is a Cell Individual Offset (CIO).

In some other embodiments, at least one of the serving cell 621 and the neighbor cell 622 is a Wireless Local Area Network (WLAN) access point, and the offset parameter is at least a threshold of at least one of: a Reference Signal Received Power (RSRP), a Reference Signal Received Quality (RSRQ), a Received Signal Code Power (RSCP), a Received Channel Power Indicator (RCPI), a Received Signal to Noise Indicator (RSNI), and a Received Signal Strength Indicator (RSSI).

In some embodiments, the set of values of the offset parameter is one of: a) a set of fixed values, and b) a nominal value and one or more scaling factors for different uplink-downlink traffic ratios.

In some embodiments, the configuring is performed with an RRC message.

In some embodiments, the network node 611 may configure the user equipment 630 with the set of values of the offset parameter so that: 1) when the uplink-downlink traffic ratio indicates that an uplink traffic of the user equipment 630 is more intense than a downlink traffic of the user equipment 630, the user equipment 630 can use the set of values of the offset parameter to expand the coverage area of the smaller cell 621, 622, and 2) when the uplink-downlink traffic ratio indicates that the current downlink traffic of the user equipment 630 is more intense than the uplink traffic of the user equipment 630, the user equipment 630 can use the set of values of the offset parameter to shrink the coverage area of the smaller cell 621, 622.

In some embodiments, the configuring is performed according to at least one of: a Quality of Service, QoS, profile of the user equipment 630, and a speed of the user equipment 630.

In some particular embodiments, the serving cell 621 is a macro cell, and the neighbor cell 622 is a small cell, or vice versa. A small cell may be, for example, a pico cell, a femto cell, a relay cell, etc...

Embodiments of a method performed by the user equipment 630 for using a set of values of an offset parameter, the set being received from a network node 611, will now be described with reference to the flowchart depicted depicted in **Figure 8.** The user equipment 630 is served by the serving cell 621 of the network node 611. The network node 611, the serving cell 621, and the user equipment 630 operate in the cellular network 600. As stated earlier, the neighbour cell 622 operates in the cellular network 600. Figure 8 depicts a flowchart of the actions that are or may be performed by the user equipment 630 in embodiments herein. Discontinued lines depict optional actions. A continuous line depicts a mandatory action.

The method may comprise the following actions, which actions may as well be carried out in another suitable order than that described below. In some embodiments, all the actions may be carried out, whereas in other embodiments only some action/s may be carried out.

**Action 801**

The user equipment 630 receives from the network node 611 the set of values of the offset parameter for triggering handover towards the neighbor cell 622. The set of values of the offset parameter is to expand or shrink the coverage area of the one of the serving cell 621 and the neighbor cell 622 that is a smaller cell, depending on an uplink-downlink traffic ratio of the user equipment 630.

In some embodiments, the set of values of the offset parameter is one of: a) a set of fixed values, and b) a nominal value and one or more scaling factors for different uplink-downlink traffic ratios.

In some embodiments, the user equipment 630 receives the sets of values via an RRC message.

In some embodiments, the user equipment 630 may receive the set of values of the offset parameter from the network node 611 so that: 1) when the uplink-downlink traffic ratio indicates that the uplink traffic of the user equipment 630 is more intense than the downlink traffic of the user equipment 630, the user equipment 630 can use the set of values of the offset parameter to expand the coverage area of the smaller cell 621, 622, and 2) when the uplink-downlink traffic ratio indicates that the current downlink traffic of the user equipment 630 is more intense than the uplink traffic of the user equipment 630, the user equipment 630 can use the set of values of the offset parameter to shrink the coverage area of the smaller cell 621, 622.

In some embodiments, the user equipment 630 may receive the set of values according to at least one of: the QoS profile of the user equipment 630, and the speed of the user equipment 630.

In some embodiments, the set of values of the offset parameter is one of: a) a set of fixed values, and b) a nominal value and one or more scaling factors for different uplink-downlink traffic ratios.

**Action 802**

The user equipment 630 may determine the uplink-downlink traffic ratio of the user equipment 630, so that the user equipment 630 may then expand or shrink the coverage area of the one of the serving cell 621 and the neighbor cell 622 that is the smaller cell, depending on the uplink-downlink traffic ratio distribution of the user equipment 630..
This is an optional action.

**Action 803**

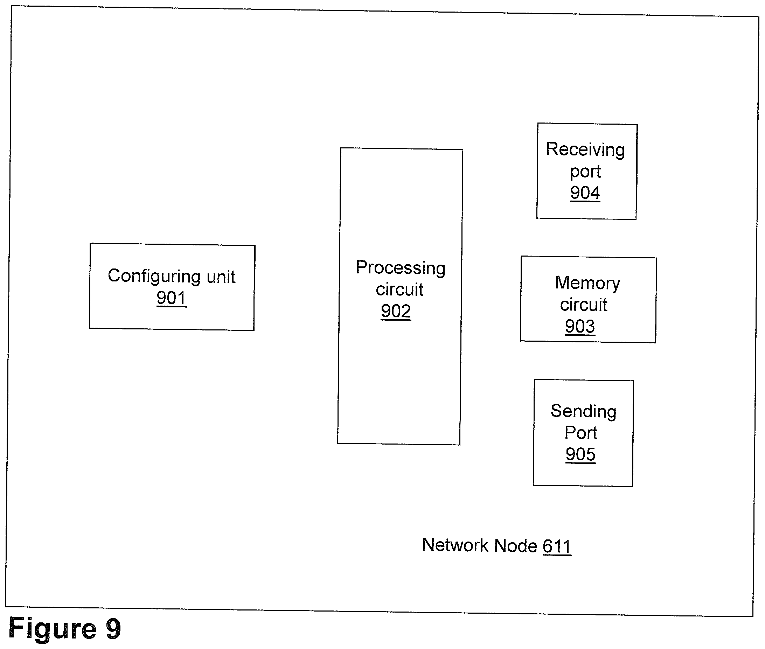

The user equipment 630 uses the received set of values of the offset parameter to expand or shrink the coverage area of the one of the serving cell 621 and the neighbor cell 622 that is the smaller cell, depending on the uplink-downlink traffic ratio distribution of the user equipment 630.
In some particular embodiments for any of the above actions, the serving cell 621 is a macro cell, and the neighbor cell 622 is a small cell, or vice versa. A small cell may be, for example, a pico cell, a femto cell, a relay cell, etc....
In some embodiments for any of the above actions, the offset parameter is comprised in a handover margin. In these embodiments, the handover margin is of a signal strength or quality of the serving cell 621 towards the neighbor cell 622.
In some of these embodiments, the offset parameter is a CIO.
In some other embodiments for any of the above actions, at least one of the serving cell 621 and the neighbor cell 622 is a WLAN access point, and the offset parameter is at least a threshold of at least one of: an RSRP, an RSRQ, an RSCP, an RCPI, an RSNI, and an RSSI.
To perform the method actions described above in relation to Figure 7 the network node 611 is adapted to configure a user equipment 630 served by the serving cell 621 with a set of values of an offset parameter for triggering handover towards a neighbor cell 622. The network node 611 comprises the following arrangement depicted in Figure 9. The network node 611, and the user equipment 630 are adapted to operate in the cellular network 600.
The network node 611 comprises a **configuring unit**, i.e., circuit, **901** adapted to configure the user equipment 630 with the set of values of the offset parameter. The set of values of the offset parameter are to expand or shrink the coverage area of the one of the serving cell 621 and the neighbor cell 622 that is a smaller cell, depending on an uplink-downlink traffic ratio of the user equipment 630.
In some embodiments, the set of values of the offset parameter is one of: a) the set of fixed values, and b) the nominal value and one or more scaling factors for different uplink-downlink traffic ratios.
In some embodiments, the configuring unit 901 may be further adapted to configure with an RRC message.
In some embodiments the configuring unit 901 may be further adapted to configure the user equipment 630 with the set of values of the offset parameter so that: 1) when the uplink-downlink traffic ratio indicates that the uplink traffic of the user equipment 630 is more intense than a downlink traffic of the user equipment 630, the user equipment 630 can use the set of values of the offset parameter to expand the coverage area of the smaller cell 621, 622, and 2) when the uplink-downlink traffic ratio indicates that the current downlink traffic of the user equipment 630 is more intense than the uplink traffic of the user equipment 630, the user equipment 630 can use the set of values of the offset parameter to shrink the coverage area of the smaller cell 621, 622.
In some embodiments, the configuring unit 901 is further adapted to configure according to at least one of: the QoS profile of the user equipment 630, and the speed of the user equipment 630.
In some embodiments, the serving cell 621 is a macro cell, and the neighbor cell 622 is a small cell, or vice versa. A small cell may be, for example, a pico cell, a femto cell, a relay cell, etc...
In some embodiments for any of the above actions, the offset parameter is comprised in a handover margin. In these embodiments, the handover margin is of a signal strength or quality of the serving cell 621 towards the neighbor cell 622.
In some of these embodiments, the offset parameter is a CIO.
In some other embodiments for any of the above actions, at least one of the serving cell 621 and the neighbor cell 622 is a WLAN access point, and the offset parameter is at least a threshold of at least one of: an RSRP, an RSRQ, an RSCP, an RCPI, an RSNI, and an RSSI.
The embodiments herein for configuring the user equipment 630 served by the serving cell 621 with the set of values of the offset parameter for triggering handover towards the neighbor cell 622 may be implemented through one or more processors, such as the **processing circuit 902** in the network node 611 depicted in Figure 9, together with computer program code for performing the functions and actions of the embodiments herein. The program code mentioned above may also be provided as a computer program product, for instance in the form of a data carrier carrying computer program code for performing the embodiments herein when being loaded into the in the network node 611. One such carrier may be in the form of a CD ROM disc. It may be however feasible with other data carriers such as a memory stick. The computer program code may furthermore be provided as pure program code on a server and downloaded to the network node 611.

The network node 611 may further comprise a **memory circuit 903** comprising one or more memory units. The memory circuit 903 may be arranged to be used to store data in relation to applications to perform the methods herein when being executed in the network node 611. Memory circuit 903 may be in communication with the processing circuit 902. Any of the other information processed by the processing circuit 902 may also be stored in the memory circuit 903.

In some embodiments, information may be received through a **receiving port 904.** In some embodiments, the receiving port 904 may be, for example, connected to the one or more antennas in the network node 611. In other embodiments, the network node 611 may receive information from another structure in the cellular network 600 through the receiving port 904. Since the receiving port 904 may be in communication with the processing circuit 902, the receiving port 904 may then send the received information to the processing circuit 902. The receiving port 904 may also be configured to receive other information.

The information processed by the processing circuit 902 in relation to the embodiments of method herein may be stored in the memory circuit 903 which, as stated earlier, may be in communication with the processing circuit 902 and the receiving port 904.

The processing circuit 902 may be further configured to transmit information, such as the transmission resource comprising the processed one or more messages, to user equipment 630, through **a sending port 905**, which may be in communication with the processing circuit 902, and the memory circuit 903.

Those skilled in the art will also appreciate that the different circuits 901-903 described above may refer to a combination of analog and digital circuits, and/or one or more processors configured with software and/or firmware, e.g., stored in memory, that, when executed by the one or more processors such as the processing circuit 902, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, the methods according to the embodiments described herein for the network node 611 are respectively implemented by means of a computer program product comprising instructions, i.e., software code portions, which, when executed on at least one processor, cause the at least one processor to carry out the actions described herein, as performed by the network node 611. The computer program product may be stored on a computer-readable storage medium. The computer-readable storage medium, having stored thereon the computer program, may comprise instructions which, when executed on at least one processor, cause the at least one processor to carry out the actions described herein, as performed by the network node 611. In some embodiments, the computer-readable storage medium may be a non-transitory computer-readable storage medium.

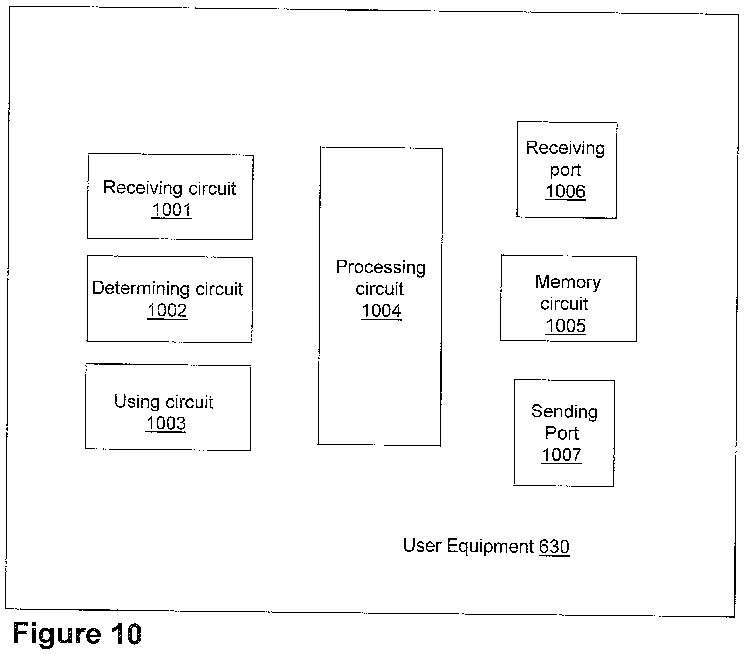

To perform the method actions described above in relation to Figure 8 the user equipment 630 is adapted to use the set of values of the offset parameter, the set being received from the network node 611. The user equipment 630 comprises the following arrangement depicted in **Figure 10.** The user equipment 630 is served by the serving cell 621 of the network node 611. The network node 611, the serving cell 621, and the user equipment 630 are adapted to operate in the cellular network 600.

The user equipment 630 comprises a **receiving circuit 1001** adapted to receive from the network node 611 the set of values of the offset parameter for triggering handover towards the neighbor cell 622. The set of values of the offset parameter is to expand or shrink the coverage area of the one of the serving cell 621 and the neighbor cell 622 that is the smaller cell, depending on an uplink-downlink traffic ratio of the user equipment 630. The neighbour cell 622 operates in the cellular network 600.

In some embodiments, the receiving circuit 1001 may be further adapted to receive via an RRC message.

In some embodiments the receiving circuit 1001 may be further adapted to receive the set of values of the offset parameter from the network node 611 so that: 1) when the uplink-downlink traffic ratio indicates that the uplink traffic of the user equipment 630 is more intense than a downlink traffic of the user equipment 630, the user equipment 630 can use the set of values of the offset parameter to expand the coverage area of the smaller cell 621, 622, and 2) when the uplink-downlink traffic ratio indicates that the current downlink traffic of the user equipment 630 is more intense than the uplink traffic of the user equipment 630, the user equipment 630 can use the set of values of the offset parameter to shrink the coverage area of the smaller cell 621, 622.

In some embodiments, the receiving circuit 1001 is further adapted to receive the set of values of the offset parameter from the network node 611according to at least one of: the QoS profile of the user equipment 630, and the speed of the user equipment 630.

The user equipment 630 also comprises a **using circuit 1003** adapted to use the received set of values of the offset parameter to expand or shrink the coverage area of the one of the serving cell 621 and the neighbor cell 622 that is the smaller cell, depending on the uplink-downlink traffic ratio distribution of the user equipment 630.

In some embodiments, user equipment 630 may also comprise a **determining circuit 1002** adapted to determine the uplink-downlink traffic ratio of the user equipment 630.

In some embodiments, the serving cell 621 is a macro cell, and the neighbor cell 622 is a small cell, or vice versa. A small cell may be, for example, a pico cell, a femto cell, a relay cell, etc...

In some embodiments for any of the above actions, the offset parameter is comprised in a handover margin. In these embodiments, the handover margin is of the signal strength or quality of the serving cell 621 towards the neighbor cell 622.

In some of these embodiments, the offset parameter is a CIO.

In some other embodiments for any of the above actions, at least one of the serving cell 621 and the neighbor cell 622 is a WLAN access point, and the offset parameter is at least a threshold of at least one of: an RSRP, an RSRQ, an RSCP, an RCPI, an RSNI, and an RSSI.

The embodiments herein for using a set of values of an offset parameter, the set being received from a network node 611 may be implemented through one or more processors, such as the **processing circuit 1004** in the user equipment 630 depicted in Figure 10, together with computer program code for performing the functions and actions of the embodiments herein. The program code mentioned above may also be provided as a computer program product, for instance in the form of a data carrier carrying computer program code for performing the embodiments herein when being loaded into the in the user equipment 630. One such carrier may be in the form of a CD ROM disc. It may be however feasible with other data carriers such as a memory stick. The computer program code may furthermore be provided as pure program code on a server and downloaded to the user equipment 630.

The user equipment 630 may further comprise a **memory circuit 1005** comprising one or more memory units. The memory circuit 1005 may be arranged to be used to store data in relation to applications to perform the methods herein when being executed in the user equipment 630. Memory circuit 1005 may be in communication with the processing circuit 1004. Any of the other information processed by the processing circuit 1004 may also be stored in the memory circuit 1005.

In some embodiments, information may be received through a **receiving port 1006.** In some embodiments, the receiving port 1006 may be, for example, connected to the one or more antennas in the user equipment 630. In other embodiments, the user equipment 630 may receive information from another structure in the cellular network 600 through the receiving port 1006. Since the receiving port 1006 may be in communication with the processing circuit 1004, the receiving port 1006 may then send the received information to the processing circuit 1004. The receiving port 1006 may also be configured to receive other information.

The information processed by the processing circuit 1004 in relation to the embodiments of method herein may be stored in the memory circuit 1005 which, as stated earlier, may be in communication with the processing circuit 1004 and the receiving port 1006.

The processing circuit 1004 may be further configured to transmit information, such as the transmission resource comprising the processed one or more messages, to user equipment 630, through **a sending port 1007**, which may be in communication with the processing circuit 1004, and the memory circuit 1005.

Those skilled in the art will also appreciate that the different circuits 1001-1005 described above may refer to a combination of analog and digital circuits, and/or one or more processors configured with software and/or firmware, e.g., stored in memory, that, when executed by the one or more processors such as the processing circuit 1004, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, the methods according to the embodiments described herein for the user equipment 630 are respectively implemented by means of a computer program product comprising instructions, i.e., software code portions, which, when executed on at least one processor, cause the at least one processor to carry out the actions described herein, as performed by the user equipment 630. The computer program product may be stored on a computer-readable storage medium. The computer-readable storage medium, having stored thereon the computer program, may comprise instructions which, when executed on at least one processor, cause the at least one processor to carry out the actions described herein, as performed by the user equipment 630. In some embodiments, the computer-readable storage medium may be a non-transitory computer-readable storage medium.

Further description and embodiments relating to any of the suitable embodiments above

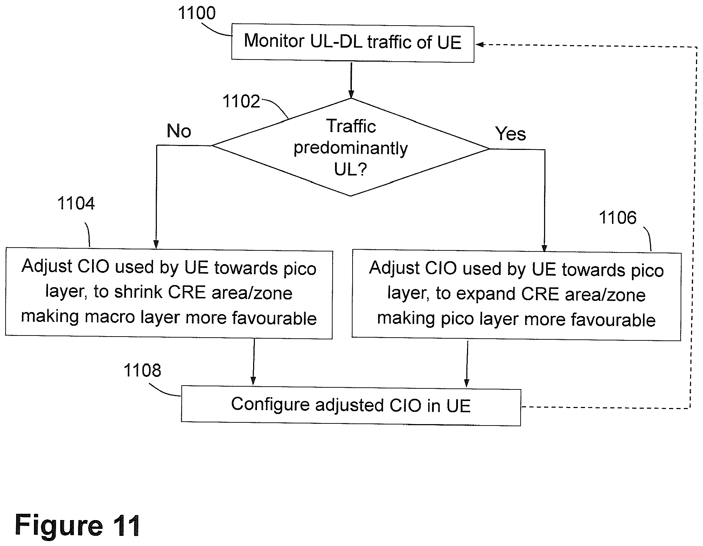

In one possible embodiment, the networks, e.g., network node 611, upon finding that the UE, e.g., user equipment 630, has started using a service that is either UL or DL intensive, sets the CIO values accordingly. For example if a user, e.g., user equipment 630, is watching a streaming video, i.e., predominantly DL traffic, the networks, e.g., network node 611, may configure it with a CIO that may shrink the CRE area, as the DL signal from macro may dominant in the CRE area, increasing the likelihood of the UE staying in the macro layer. On the other hand, if it is found out that the UE, e.g., user equipment 630, is uploading a large file, the CIO values to be used by that UE may be adjusted in such a way to expand the CRE zone, increasing the chances of the UE being handed over to the pico layer. This embodiment is illustrated in **Figure 11.** In the following description any reference to the UE may be understood to apply to user equipment 630, unless otherwise noted.

The determination of the UL/DL traffic split may be made in several ways, for example by one or both of:

Identifying the active services of the UE via Deep Packet Inspection (DPI), e.g., UL file upload, streaming video, etc...

Actively monitoring the DL buffer status of the UE at the eNB, e.g., network node 611, and the UL buffer status reports received by the UE.

The monitoring and/or adjustment may be performed either in periodically or in a continuous fashion. Different threshold level for the UL/DL traffic ratio may be used to trigger CIO modification, for example by one or both of:

CIO adjustment initiated every time the UL/DL traffic split ratio changes by a certain amount from the value at which previous changes were set.
CIO adjustment initiated when the UL traffic or DL traffic ratio becomes above or below a certain percentage.

In order to avoid too frequent changes of the CIO, e.g. due to traffic fluctuations that last only for short durations, a time to trigger value may be defined, where the CIO adjustment may be requested only if the conditions for a change are satisfied for a given duration. Also, a certain absolute level of UL/DL traffic value, e.g. in Kilobytes per second (Kbps) may be set, below which the CIO adjustments may not triggered.

The amount by which the CIO value may be increased or decreased may be either a fixed value for each adjustment, or it may depend on the difference between the UL/DL traffic split ratio at the time of the previous adjustment and the current value that may be triggering the adjustment.

Note that the working assumption is that the macro eNBs, e.g., network node 611, may know whether a neighbor node is a pico, e.g., neighbor network node 612, or another macro, in order to set the CIO accordingly. This may be realized either via O&M or some proprietary method during neighbor relation formation.

In a second possible embodiment, the UE, e.g., user equipment 630, may be configured with a set of, for example, CIO values, for triggering handover measurements towards a certain pico neighbour cell, such as the neighbor network node 612, rather than the currently standardized one value for a given cell, that it may use, depending on its UL/DL traffic distribution. For example, the UE, e.g., user equipment 630, may be configured to use four CIO values: CIO1 for 0-24% of UL traffic ratios, CIO2 for 25-49% of UL traffic ratios, CIO3 for 50-74% of UL traffic ratios, and CIO4 for 75-100% of UL traffic ratios. The UE may easily determine the UL/DL traffic split by, e.g., monitoring its UL/DL buffers. The mechanisms for controlling the adjustment frequency and granularity, as well as the prevention of unnecessary adjustments are the same as those described further down below for additional embodiments.

Instead of configuring different CIO values, the networks, e.g., network node 611, may simply communicate a nominal value and different scaling factors for different UL/DL traffic split ratios. Alternatively, a single scaling factor per a certain percentage increase in UL/DL traffic ratio may be specified along with a nominal CIO, e.g., adjust the CIO by 1dB for every 20% increase in UL/DL traffic split ratio.

In a third possible embodiment, the CIO adjustment decision takes the QoS aspect/profile of the user, e.g., user equipment 630, into consideration. For example, if the resources in the pico layer are limited and not enough for all the users, then the CIO value may be used to make offloading priority for users with Gold QoS profile as compared with those with Silver QoS profile. This may be combined with the mechanisms of an additional embodiment described later, where the networks, e.g., network node 611, checks the resource situation at the macro and pico layers, as well as the user's QoS profile before adjusting the CIO values.

In a fourth possible embodiment, the network considers the UE's, e.g., user equipment 630, speed in adjusting the CIO values. By doing so, the network, e.g., network node 611, may ensure that the probability of a very fast UE, e.g., user equipment 630, being offloaded to the pico layer is reduced, thereby reducing the probability of handover failures, and unnecessary ping pong handovers between the pico and macro layers.

In a fifth possible embodiment, the UE is communicated with different CIO values, similar to the second embodiment, but this time the CIO values are based on different UE speeds. The UE, which can determine its speed by different mechanisms, such as GPS, handover/reselection count, etc..., then may choose the appropriate value depending on its instantaneous speed. Note that the fifth and second embodiment may be readily combined.

In order to limit the number of adjustments, similar to the case of UL/DL traffic split ratio dependent scaling, time to triggers values may be defined for the speed based adjustments as well.

In a sixth possible embodiment, when handover is performed between two cells in the macro layer, the UL/DL traffic split history, or alternatively, the CIO adjustment history, may be communicated towards the target cell. In that way, the statistics that may have been gathered from the previous cell may be used as an input in adjusting the CIO values for the UE, resulting in a much faster convergence to the optimal CIO value. The history information may be communicated either as a new message during handover, or it may be included in an enhanced version of the UE history information that may be already standardized and communicated during handover, currently the UE history may include only the previous cells the UE has been connected with, the type of the cells, and the duration the UE may have spent in each cell.

In a seventh possible embodiment, the statistics regarding a given UE's UL/DL traffic split ratio may be collected at the networks, e.g. via the help of PDN GWs and collected at a smart mobile broadband entity in the network. From this statistics it may be predicted whether the UE is an UL heavy or DL heavy user, and this information may be used by the eNB, e.g., network node 611, when setting the default CIO values to be used by that U E.

Note that most of the above embodiments may be applied together in any combination, and the embodiments herein are not limited in this respect. Some possible examples of combining the above embodiments 1 and 3 are given below:

The networks, e.g., network node 611, may perform the CIO adjustment for all its UEs on a periodic fashion. Each adjustment instant, the UEs may be ordered according to decreasing/increasing UL/DL traffic ratio ranges, and within each range ordered according to QoS profile, e.g. Gold, Silver, Bronze, etc.... The adjustment may be performed according to this ordered list, until a certain number of adjustments are made, or some other criteria such as a target number of UEs are expected to be offloaded soon, which may be predicted from the previous measurement reports received from the UEs, if any, and the current CIO adjustment to be applied for each UE.

- The value for a one time adjustment may be dependent on the UEs QoS profile, e.g. the adjustment granularity for Gold users will be X dBs while for Bronze users will be Y dBs.

- The value of a one time adjustment may take both the UEs QoS profile as well as the UL/DL traffic ratio change since the previous adjustment, by applying different weighting for each factor.

Embodiments 2 and 3 may also be combined by ensuring that the set of the CIO values to be communicated to the UE are scaled based on the users QoS profile, e.g. gold users will receive different CIO value sets than bronze users.

As explained above, in the Cell Range Expansion (CRE) area between Pico and Macro, the UE may have different performance whether it is connected to the Macro or to the Pico. In the CRE, the UE may have a better DL connection from the Macro but a better UL connection from the Pico. As such, optimal offloading decisions may consider the UE's traffic split between the UL and DL.

By shrinking the CRE region of a UE with a heavy DL traffic, the probability of the UE staying connected to the macro may be increased. If such a UE was to be offloaded to the pico layer, the macro might have to allocate more subframes to ABS to protect the UE, which would have harmed the other UEs being served by the macro.

Similarly, by expanding the CRE region of a UE with a heavy UL traffic, the probability of the UE being offloaded to the pico layer may be increased, where it may get the best UL performance, instead of using higher power to transmit to a far away macro and creating more interference on the UL reception of the UEs connected to the pico layer.

The embodiments herein may also be employed to address the user's QoS profile as a basis for making CRE settings, e.g. such that users with higher QoS profile may be given priority to stay in the macro layer or be offloaded to the pico layer, depending on their UL/DL traffic split ratio.

In other possible examples, embodiment 1 and 3 may be implemented in a proprietary fashion and as such legacy terminals may be supported. When increasing/decreasing the traffic ratio on a UE, determining that the network changes the CRE related configuration is an indication that embodiments herein are used.

Embodiment 2 may require a standardization change in the measurement configuration settings to communicate multiple CIO values for a certain neighbor, as such is implicitly protected, that is, e.g., the CIO value is set on a per cell level, or even on a per network level.

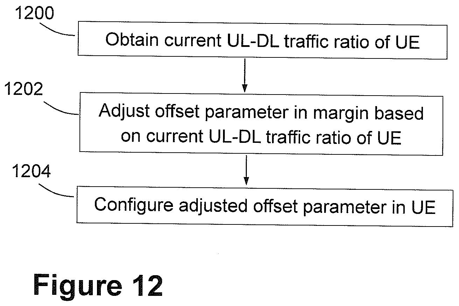

A further example of embodiments herein will now be described in more detail in terms of a procedure performed by a network node, e.g., network node 611, of a serving cell, e.g. serving cell 621, in a cellular networks, such as cellular network 600, for determining an offset parameter comprised in a handover margin, HOM, and with reference to the flow chart in **Figure 12.** It may be assumed that a UE is served by the network node, e.g., network node 611, and that the UE may be configured to send a measurement report to the network node, e.g., network node 611, when a metric N measured on downlink signals from a neighbour cell is better than a metric S measured on downlink signals from the serving cell, e.g., serving cell 621, plus the handover margin. The measurement report could be used by the network node, e.g., network node 611, as a basis to initiate a handover of the UE to the neighbour cell, e.g., neighbor cell 622. The offset parameter in this example may be the above-described CIO although the embodiments herein are not limited thereto.

A first **action 1200** illustrates that the network node, e.g., network node 611, may obtain a current uplink - downlink traffic ratio of the UE. Another **action 1202** illustrates that the network node, e.g., network node 611, may adjust the offset parameter from a default value to an adjusted value based on the current uplink - downlink traffic ratio of the UE. A final shown **action 1204** illustrates that the network node, e.g., network node 611, may configure the adjusted offset parameter value in the UE, which may be done by sending the adjusted offset parameter value or an indication thereof to the UE in a suitable DL message.

The above procedure of Figure 12 may be realized in different ways. In one possible embodiment, the measured metric comprises any of: received signal strength, Reference Signal Received Power (RSRP), Reference Signal Received Quality (RSRQ), Reference Signal Code Power (RSRP), Signal to Interference and Noise Ratio (SINR), and bit error rate. When saying that the metric N of the neighbour cell, e.g., neighbor cell 622, may be better than the metric S of the serving cell, e.g., serving cell 621, plus the handover margin, it may imply that metric N is a higher value than metric S and the handover margin if the metric is any of received signal strength, RSRP, RSRQ, and SINR. On the other hand, it may imply that metric N is a lower value than metric S and the handover margin if the metric is bit error rate.

In another possible embodiment, the Handover Margin (HOM) may be included in a trigger condition (N > S + HOM) triggering the UE to send the measurement report to the network node, e.g., network node 611, when the trigger condition is fulfilled.

In another possible embodiment, the offset parameter is a Cell Individual Offset (CIO).

In another possible embodiment, the neighbour cell, e.g., neighbor cell 622, is a pico cell and when the current uplink - downlink traffic ratio indicates that the current uplink traffic of the UE is more intense than the current downlink traffic of the UE, the offset parameter is adjusted to expand the CRE area of the pico cell.

In another possible embodiment, the neighbour cell, e.g., neighbor cell 622, is a pico cell and when the current uplink - downlink traffic ratio indicates that the current downlink traffic of the UE is more intense than the current uplink traffic of the UE, the offset parameter is adjusted to shrink the CRE area of the pico cell.

In another possible embodiment, the serving cell, e.g., serving cell 621, is a pico cell and when the current uplink - downlink traffic ratio indicates that the current uplink traffic of the UE is more intense than the current downlink traffic of the UE, the offset parameter is adjusted to expand the CRE area of the pico cell.

In another possible embodiment, the serving cell, e.g., serving cell 621, is a pico cell and when the current uplink - downlink traffic ratio indicates that the current downlink traffic of the UE is more intense than the current uplink traffic of the UE, the offset parameter is adjusted to shrink the CRE area of the pico cell.

In another possible embodiment, the serving, e.g., serving cell 621, cell is a macro cell and the neighbour cell, e.g., neighbor cell 622, is a pico cell or vice versa, and wherein the offset parameter is determined to control the traffic load in at least one of the serving cell, e.g., serving cell 621, and the neighbour cell, e.g., neighbor cell 622.

It should be noted that the above embodiments can be used one at a time or together in any combination of two or more embodiments whenever suitable.

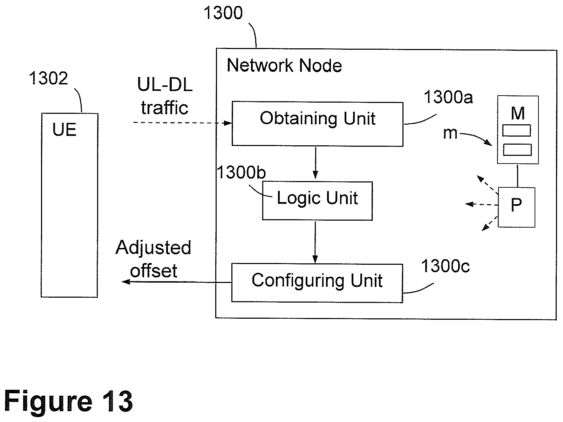

A detailed but non-limiting example of how a network node, e.g., network node 611, of a serving cell, e.g., serving cell 621, in a cellular networks, e.g., cellular network 600, may be configured to accomplish some of the above-described examples and embodiments, is illustrated by the block diagram in **Figure 13.** The network node 1300, e.g., network node 611, may be configured to determine an offset parameter comprised in a handover margin (HOM) of the serving cell, e.g., serving cell 621, towards a neighbour cell, e.g., neighbor cell 622, wherein a UE 1302, e.g., user equipment 630, served by the network node, e.g., network node 611, may be configured to send a measurement report to the network node, e.g., network node 611, when a metric (N) measured on downlink signals from a neighbour cell, e.g., neighbor cell 622, is better than a metric (S) measured on downlink signals from the serving cell, e.g., serving cell 621, plus the handover margin, and wherein said measurement report could be used by the network node, e.g., network node 611, to initiate a handover of the UE, e.g., user equipment 630, to the neighbour cell, e.g., user equipment 630, e.g. according to any of the procedures shown in Figures 11 and 12. The network node 1300 will now be described in terms of a possible example of employing some embodiments herein.

The network node 1300 may comprise an obtaining unit 1300a adapted to obtain a current uplink - downlink traffic ratio of the UE, e.g., user equipment 630. The network node 1300 may also comprise a logic unit 1300b adapted to adjust the offset parameter from a default value to an adjusted value based on the current uplink - downlink traffic ratio of the UE, e.g., user equipment 630. The network node 1300 may also comprise a configuring unit 1301 adapted to configure the adjusted offset parameter value in the UE, e.g. by sending the adjusted offset parameter value or an indication thereof to the UE in a suitable DL message.

The above network node 1300 and its functional units 1300a-c may be configured or adapted to operate according to various optional embodiments e.g. to implement any of the above-described embodiments of the procedures in Figures 11 and 12.

It should be noted that Figure 13 illustrates various functional units in the network node 1300 and the skilled person is able to implement these functional units in practice using suitable software and hardware. Thus, the solution is generally not limited to the shown structures of the network node 1300, and the functional units13-c may be configured to operate according to any of the features described in this disclosure, where appropriate.

The functional units 1300a-c described above can be implemented in the network node 1300 by means of program modules of a respective computer program comprising code means which, when run by a processor "P" causes the network node 1300 to perform the above-described actions and procedures. The processor P may comprise a single Central Processing Unit (CPU), or could comprise two or more processing units. For example, the processor P may include a general purpose microprocessor, an instruction set processor and/or related chips sets and/or a special purpose microprocessor such as an Application Specific Integrated Circuit (ASIC). The processor P may also comprise a storage for caching purposes.

Each computer program may be carried by a computer program product in the network node 800 in the form of a memory "M" having a computer readable medium and being connected to the processor P. The computer program product or memory M thus comprises a computer readable medium on which the computer program is stored e.g. in the form of computer program modules "m". For example, the memory M may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the network node 1300.

While the solution has been described with reference to specific exemplary embodiments, the description is generally only intended to illustrate the inventive concept and should not be taken as limiting the scope of the solution. For example, the terms "network node", "eNB", "UE", "offset parameter", "handover margin" and have been used throughout this description, although any other corresponding entities, functions, and/or parameters could also be used having the features and characteristics described here.

When using the word "comprise" or "comprising" it shall be interpreted as non-limiting, i.e. meaning "consist at least of".

The embodiments herein are not limited to the above described preferred embodiments. Various alternatives, modifications and equivalents may be used. Therefore, the above embodiments should not be taken as limiting the scope of the invention.

Abbreviations:

| | |
|---|---|
| 3GPP | 3rd Generation Partnership Project |
| CIO | Cell Individual Offset |
| eNodeB | E-UTRAN NodeB |
| eNB | E-UTRAN NodeB |
| EPC | Evolved Packet Core |
| E-UTRAN | Evolved UTRAN |
| HO | Handover |
| LTE | Long Term Evolution |
| MLB | Mobility Load Balancing |
| MME | Mobility Management Entity |
| MRO | Mobility Robustness Optimisation |
| MUE | Macro UE |
| O&M | Operation and Maintenance |
| PLMN | Public Land Mobile Network |
| RAN | Radio Access Network |
| RLF | Radio Link Failure |
| RRC | Radio Resource Control |
| S1 | Interface between eNB and CN. |
| S1AP | S1 Application Protocol |
| S1-MME | Control Plane of S1. |
| UE | User Equipment |
| UTRAN | Universal Terrestrial Radio Access Network |
| X2 | Interface between eNBs. |

**Claims**

1. A method performed by a network node (611) of a serving cell (621), the method being for configuring a user equipment (630) served by the serving cell (621) with a set of values of an offset parameter for triggering handover towards a neighbor cell (622), wherein the network node (611), and the user equipment (630) operate in a cellular network (600), the method comprising:

*configuring* (701) the user equipment (630) with the set of values of the offset parameter, the set of values of the offset parameter being to expand or shrink a coverage area of the one of the serving cell (621) and the neighbor cell (622) that is a smaller cell, depending on an uplink-downlink traffic ratio of the user equipment (630).

2. The method of claim 1, wherein the set of values of the offset parameter is one of:

a) a set of fixed values, and b) a nominal value and one or more scaling factors for different uplink-downlink traffic ratios.

3. The method of any of claims 1-2, wherein the configuring (701) is performed with an RRC message.

4. The method of any of claims 1-3, wherein the network node (611) configures the user equipment (630) with the set of values of the offset parameter so that:

when the uplink-downlink traffic ratio indicates that an uplink traffic of the user equipment (630) is more intense than a downlink traffic of the user equipment (630), the user equipment (630) can use the set of values of the offset parameter to expand the coverage area of the smaller cell (621, 622), and
when the uplink-downlink traffic ratio indicates that the current downlink traffic of the user equipment (630) is more intense than the uplink traffic of the user equipment (630), the user equipment (630) can use the set of values of the offset parameter to shrink the coverage area of the smaller cell (621, 622).

5. The method of any of claims 1-4, wherein the configuring (701) is performed according to at least one of: a Quality of Service, QoS, profile of the user equipment (630), and a speed of the user equipment (630).

6. The method of any of claims 1-5, wherein the serving cell (621) is a macro cell, and wherein the neighbor cell (622) is a small cell, or vice versa.

7. The method of any of claims 1-6, wherein the offset parameter is comprised in a handover margin, the handover margin being of a signal strength or quality of the serving cell (621) towards the neighbor cell (622).

8. The method of any of claims 6-7, wherein the offset parameter is a Cell Individual Offset, CIO.

9. The method of any of claims 1-5, wherein at least one of the serving cell (621) and the neighbor cell (622) is a wireless local area network, WLAN, access point, and wherein the offset parameter is at least a threshold of at least one of: a Reference Signal Received Power, RSRP, a Reference Signal Received Quality, RSRQ, a Received Signal Code Power, RSCP, a Received Channel Power Indicator, RCPI, a Received Signal to Noise Indicator, RSNI, and a Received Signal Strength Indicator, RSSI.

10. A method performed by a user equipment (630), the method being for using a set of values of an offset parameter, the set being received from a network node (611), wherein the user equipment (630) is served by a serving cell (621) of the network node (611), and wherein the network node (611), the serving cell (621), and the user equipment (630) operate in a cellular network (600), the method comprising:

*receiving* (801) from the network node (611) the set of values of the offset parameter for triggering handover towards a neighbor cell (622), the set of values of the offset parameter being to expand or shrink a coverage area of the one of the serving cell (621) and the neighbor cell (622) that is a smaller cell, depending on an uplink-downlink traffic ratio of the user equipment (630), the neighbour cell (622) operating in the cellular network (600), and
*using* (803) the received set of values of the offset parameter to expand or shrink the coverage area of the one of the serving cell (621) and the neighbor cell (622) that is the smaller cell, depending on the uplink-downlink traffic ratio distribution of the user equipment (630).

11. The method of claim 10, further comprising:

*determining* (802) the uplink-downlink traffic ratio of the user equipment (630).

12. A network node (611) of a serving cell (621) adapted to configure a user equipment (630) served by the serving cell (621) with a set of values of an offset parameter for triggering handover towards a neighbor cell (622), wherein the network node (611), and the user equipment (630) are adapted to operate in a cellular network (600), the network node (611) comprising:

a configuring unit (901) adapted to configure the user equipment (630) with the set of values of the offset parameter, the set of values of the offset parameter being to expand or shrink a coverage area of the one of the serving cell (621) and the neighbor cell (622) that is a smaller cell, depending on an uplink-downlink traffic ratio of the user equipment (630).

13. A user equipment (630) adapted to use a set of values of an offset parameter, the set being received from a network node (611), wherein the user equipment (630) is served by a serving cell (621) of the network node (611), and wherein the network node (611), the serving cell (621), and the user equipment (630) are adapted to operate in a cellular network (600), the user equipment (630) comprising:

a receiving circuit (1001) adapted to receive from the network node (611) the set of values of the offset parameter for triggering handover towards a neighbor cell (622), the set of values of the offset parameter being to expand or shrink a coverage area of the one of the serving cell (621) and the neighbor cell (622) that is a smaller cell, depending on an uplink-downlink traffic ratio of the user equipment (630), the neighbour cell (622) operating in the cellular network (600), and
a using circuit (1003) adapted to use the received set of values of the offset parameter to expand or shrink the coverage area of the one of the serving cell (621) and the neighbor cell (622) that is the smaller cell, depending on the uplink-downlink traffic ratio distribution of the user equipment (630).

14. A computer-readable storage medium, having stored thereon a computer program comprising instructions which, when executed on at least one processor, cause the at least one processor to carry out the method according to any one of claims 1 to 9.

15. A computer-readable storage medium, having stored thereon a computer program comprising instructions which, when executed on at least one processor, cause the at least one processor to carry out the method according to any one of claims 10 to 11.

**Patentansprüche**

1. Verfahren, das durch einen Netzwerkknoten (611) einer Versorgungszelle (621) ausgeführt wird, wobei das Verfahren zum Konfigurieren eines Benutzergeräts (630) ist, das von der Versorgungszelle (621) mit einem Wertesatz von einem Offset-Parameter zum Auslösen einer Übergabe zu einer Nachbarzelle (622) bedient wird, wobei der Netzwerkknoten (611) und das Benutzergerät (630) in einem Mobilfunknetz (600) betrieben werden, das Verfahren umfassend:

*Konfigurierten* (701) des Benutzergeräts (630) mit dem Wertesatz des Offset-Parameters, wobei der Wertesatz des Offset-Parameters dazu ist, einen Abdeckungsbereich der einen von der Versorgungszelle (621) und der Nachbarzelle (622) auszudehnen oder zu begrenzen, die abhängig von einem Verhältnis Uplink-Downlink-Verkehr des Benutzergeräts (630) eine kleinere Zelle ist.

2. Verfahren nach Anspruch 1, wobei der Wertesatz des Offset-Parameters einer der Folgenden ist: a) ein Satz festgelegter Werte und b) ein Sollwert und ein oder mehrere Skalierungsfaktoren für verschiedene Verhältnisse Uplink-Downlink-Verkehr.

3. Verfahren nach einem der Ansprüche 1-2, wobei das Konfigurieren (701) mit einer RRC-Nachricht ausgeführt wird.

4. Verfahren nach einem der Ansprüche 1-3, wobei der Netzwerkknoten (611) das Benutzergerät (630) mit dem Wertesatz des Offset-Parameters konfiguriert, sodass:

wenn das Verhältnis Uplink-Downlink-Verkehr angibt, dass ein Uplink-Verkehr des Benutzergeräts (630) intensiver ist als ein Downlink-Verkehr des Benutzergeräts (630), das Benutzergerät (630) den Wertesatz des Offset-Parameters verwenden kann, um den Abdeckungsbereich der kleineren Zelle (621, 622) auszudehnen, und
wenn das Verhältnis Uplink-Downlink-Verkehr angibt, dass der aktuelle Downlink-Verkehr des Benutzergeräts (630) intensiver ist als der Uplink-Verkehr des Benutzergeräts (630), das Benutzergerät (630) den Wertesatz des Offset-Parameters verwenden kann, um den Abdeckungsbereich der kleineren Zelle (621, 622) zu begrenzen.

5. Verfahren nach einem der Ansprüche 1-4, wobei das Konfigurieren (701) gemäß mindestens einem der Folgenden ausgeführt wird: einer Servicequalität, QoS, einem Profil des Benutzergeräts (630) und einer Geschwindigkeit des Benutzergeräts (630).

6. Verfahren nach einem der Ansprüche 1-5, wobei die Versorgungszelle (621) eine Makrozelle ist, und wobei die Nachbarzelle (622) eine kleine Zelle ist, oder umgekehrt.

7. Verfahren nach einem der Ansprüche 1-6, wobei der Offset-Parameter in einer Übergabespanne liegt, wobei die Übergabespanne aus einer Signalstärke oder Signalqualität der Versorgungszelle (621) zu der Nachbarzelle (622) besteht.

8. Verfahren nach einem der Ansprüche 6-7, wobei der Offset-Parameter ein individueller Zellenoffset, CIO, ist.

9. Verfahren nach einem der Ansprüche 1-5, wobei mindestens eine von der Versorgungszelle (621) und der Nachbarzelle (622) ein Zugangspunkt eines drahtlosen lokalen Netzwerks, WLAN, ist und wobei der Offset-Parameter mindestens ein Schwellenwert von mindestens einem der Folgenden ist: eine empfangene Referenzsignalleistung, RSRP, eine empfangene Referenzsignalqualität, RSRQ, eine empfangene Signalcodeleistung, RSCP, ein empfangener Kanalleistungsindikator, RCPI, ein empfangener Indikator von Signal auf Rauschen, RSNI, und ein empfangener Signalstärkeindikator, RSSI.

10. Verfahren, das durch ein Benutzergerät (630) ausgeführt wird, wobei das Verfahren zum Verwenden eines Wertesatzes von einem Offset-Parameter ist, der Satz von einem Netzwerkknoten (611) erhalten wird, wobei das Benutzergerät (630) von einer Versorgungszelle (621) des Netzwerkknotens (611) bedient wird und wobei der Netzwerkknoten (611), die Versorgungszelle (621) und das Benutzergerät (630) in einem Mobilfunknetz (600) betrieben werden, das Verfahren umfassend:

*Empfangen* (801) des Wertesatzes des Offset-Parameters vom Netzwerkknoten (611) zum Auslösen einer Übergabe zu einer Nachbarzelle (622), wobei der Wertesatz des Offset-Parameters dazu dient, einen Abdeckungsbereich der einen von der Versorgungszelle (621) und der Nachbarzelle (622) auszudehnen oder zu begrenzen, die abhängig von einem Verhältnis Uplink-Downlink-Verkehr des Benutzergeräts (630) eine kleinere Zelle ist, wobei die Nachbarzelle (622) im Mobilfunknetz (600) betrieben wird, und
*Verwenden* (803) des empfangenen Wertesatz des Offset-Parameters zum Ausdehnen oder Begrenzen des Abdeckungsbereichs der einen von der Versorgungszelle (621) und der Nachbarzelle (622), die abhängig von einer Verhältnisverteilung Uplink-Downlink-Verkehr des Benutzergeräts (630) die kleinere Zelle ist.

11. Verfahren nach Anspruch 10, ferner umfassend:

*Bestimmen* (802) des Verhältnisses Uplink-Downlink-Verkehr des Benutzergeräts (630).

12. Netzwerkknoten (611) einer Versorgungszelle (621), der angepasst ist, um ein Benutzergerät (630) zu konfigurieren, das von der Versorgungszelle (621) mit einem Wertesatz eines Offset-Parameters zum Auslösen einer Übergabe zu einer Nachbarzelle (622) bedient wird, wobei der Netzwerkknoten (611) und das Benutzergerät (630) angepasst sind, um in einem Mobilfunknetz (600) betrieben zu werden, der Netzwerkknoten (611) umfassend:

eine Konfigurationseinheit (901), die angepasst ist, um das Benutzergerät (630) mit dem Wertesatz des Offset-Parameters zu konfigurieren, wobei der Wertesatz des Offset-Parameters dazu ist, einen Abdeckungsbereich der einen von der Versorgungszelle (621) und der Nachbarzelle (622) auszudehnen oder zu begrenzen, die abhängig von einem Verhältnis Uplink-Downlink-Verkehr des Benutzergeräts (630) eine kleinere Zelle ist.

13. Benutzergerät (630), das angepasst ist, um einen Wertesatz eines Offset-Parameters zu verwenden, wobei der Satz von einem Netzwerkknoten (611) empfangen wird, wobei das Benutzergerät (630) von einer Versorgungszelle (621) des Netzwerkknotens (611) bedient wird, und wobei der Netzwerkknoten (611), die Versorgungszelle (621) und das Benutzergerät (630) angepasst sind, um in einem Mobilfunknetz (600) betrieben zu werden, das Benutzergerät (630) umfassend:

einen Empfangskreis (1001), der angepasst ist, um vom Netzwerkknoten (611) den Wertesatz des Offset-Parameters zum Auslösen einer Übergabe zu einer Nachbarzelle (622) zu empfangen, wobei der Wertesatz des Offset-Parameters dazu dient, einen Abdeckungsbereich der einen von der Versorgungszelle (621) und der Nachbarzelle (622) auszudehnen oder zu begrenzen, die abhängig von einem Verhältnis Uplink-Downlink-Verkehr des Benutzergeräts (630) eine kleinere Zelle ist, wobei die Nachbarzelle (622) im Mobilfunknetz (600) betrieben wird, und

einen Verwendungskreis (1003), der angepasst ist, um den empfangenen Wertesatz des Offset-Parameters zum Ausdehnen oder Begrenzen des Abdeckungsbereichs der einen von der Versorgungszelle (621) und der Nachbarzelle (622) zu verwenden, die abhängig von einer Verhältnisverteilung Uplink-Downlink-Verkehr des Benutzergeräts (630) die kleinere Zelle ist.

14. Computerlesbares Speichermedium, auf dem ein Computerprogramm gespeichert ist, umfassend Anweisungen, die bei Ausführung von mindestens einem Prozessor den mindestens einen Prozessor veranlassen, das Verfahren gemäß einem der Ansprüche 1 bis 9 auszuführen.

15. Computerlesbares Speichermedium, auf dem ein Computerprogramm gespeichert ist, umfassend Anweisungen, die bei Ausführung von mindestens einem Prozessor den mindestens einen Prozessor veranlassen, das Verfahren gemäß einem der Ansprüche 10 bis 11 auszuführen.

**Revendications**

1. Procédé mis en oeuvre par un noeud de réseau (611) d'une cellule de desserte (621), le procédé étant destiné à configurer un équipement d'utilisateur (630), desservi par la cellule de desserte (621), avec un ensemble de valeurs d'un paramètre de décalage, en vue de déclencher un transfert intercellulaire vers une cellule voisine (622), dans lequel le noeud de réseau (611) et l'équipement d'utilisateur (630) opèrent dans un réseau cellulaire (600), le procédé comprenant les étapes ci-dessous consistant à :

   *configurer* (701) l'équipement d'utilisateur (630) avec l'ensemble de valeurs du paramètre de décalage, l'ensemble de valeurs du paramètre de décalage étant destiné à élargir ou rétrécir une zone de couverture de ladite une cellule, parmi la cellule de desserte (621) et la cellule voisine (622), qui est une cellule plus petite, en fonction d'un rapport « trafic de liaison montante sur trafic de liaison descendante » de l'équipement d'utilisateur (630).

2. Procédé selon la revendication 1, dans lequel l'ensemble de valeurs du paramètre de décalage correspond à l'un parmi : a) un ensemble de valeurs fixes et b) une valeur nominale et un ou plusieurs facteurs de mise à l'échelle pour différents rapports « trafic de liaison montante sur trafic de liaison descendante ».

3. Procédé selon l'une quelconque des revendications 1 à 2, dans lequel l'étape de configuration (701) est mise en oeuvre avec un message de gestion RRC.

4. Procédé selon l'une quelconque des revendications 1 à 3, dans lequel le noeud de réseau (611) configure l'équipement d'utilisateur (630) avec l'ensemble de valeurs du paramètre de décalage de sorte que :

   lorsque le rapport « trafic de liaison montante sur trafic de liaison descendante » indique qu'un trafic de liaison montante de l'équipement d'utilisateur (630) est plus intense qu'un trafic de liaison descendante de l'équipement d'utilisateur (630), l'équipement d'utilisateur (630) peut utiliser l'ensemble de valeurs du paramètre de décalage en vue d'élargir la zone de couverture de la cellule plus petite (621, 622) ; et
   lorsque le rapport « trafic de liaison montante sur trafic de liaison descendante » indique que le trafic de liaison descendante en cours de l'équipement d'utilisateur (630) est plus intense que le trafic de liaison montante de l'équipement d'utilisateur (630), l'équipement d'utilisateur (630) peut utiliser l'ensemble de valeurs du paramètre de décalage en vue de rétrécir la zone de couverture de la cellule plus petite (621, 622).

5. Procédé selon l'une quelconque des revendications 1 à 4, dans lequel l'étape de configuration (701) est mise en oeuvre selon au moins l'un quelconque des éléments parmi : un profil de qualité de service, QoS, de l'équipement d'utilisateur (630), et une vitesse de l'équipement d'utilisateur (630).

6. Procédé selon l'une quelconque des revendications 1 à 5, dans lequel la cellule de desserte (621) est une macrocellule, et dans lequel la cellule voisine (622) est une petite cellule, ou inversement.

7. Procédé selon l'une quelconque des revendications 1 à 6, dans lequel le paramètre de décalage est compris dans une marge de transfert intercellulaire, la marge de transfert intercellulaire étant d'une qualité ou d'une intensité de signal de la cellule de desserte (621) vers la cellule voisine (622).

8. Procédé selon l'une quelconque des revendications 6 à 7, dans lequel le paramètre de décalage est un décalage individuel de cellule, CIO.

9. Procédé selon l'une quelconque des revendications 1 à 5, dans lequel au moins l'une parmi la cellule de desserte (621) et la cellule voisine (622) correspond à un point d'accès de réseau local sans fil, WLAN, et dans lequel le paramètre de décalage correspond à au moins un seuil d'au moins l'une des caractéristiques parmi : une puissance reçue de signal de référence, RSRP, une qualité reçue de signal de référence, RSRQ, une puissance de code de signal reçu, RSCP, un indicateur de puissance de canal reçu, RCPI, un indicateur de rapport « signal reçu sur bruit », RSNI et un indicateur d'intensité de signal reçu, RSSI.

10. Procédé mis en oeuvre par un équipement d'utilisateur (630), le procédé étant destiné à utiliser un ensemble de valeurs d'un paramètre de décalage, l'ensemble étant reçu en provenance d'un noeud de réseau (611), dans lequel l'équipement d'utilisateur (630) est desservi par une cellule de desserte (621) du noeud de réseau (611), et dans lequel le noeud de réseau (611), la cellule de desserte (621) et l'équipement d'utilisateur (630) opèrent dans un réseau cellulaire (600), le procédé comprenant les étapes ci-dessous consistant à :

recevoir (801), en provenance du noeud de réseau (611), l'ensemble de valeurs du paramètre de décalage en vue de déclencher un transfert intercellulaire vers une cellule voisine (622), l'ensemble de valeurs du paramètre de décalage étant destiné à élargir ou à rétrécir une zone de couverture de ladite une parmi la cellule de desserte (621) et la cellule voisine (622), qui est une cellule plus petite, en fonction d'un rapport « trafic de liaison montante sur trafic de liaison descendante » de l'équipement d'utilisateur (630), la cellule voisine (622) opérant dans le réseau cellulaire (600) ; et
utiliser (803) l'ensemble de valeurs reçu du paramètre de décalage en vue d'élargir ou de rétrécir la zone de couverture de ladite une parmi la cellule de desserte (621) et la cellule voisine (622), qui est la cellule plus petite, en fonction de la répartition de rapport « trafic de liaison montante sur trafic de liaison descendante » de l'équipement d'utilisateur (630).

11. Procédé selon la revendication 10, comprenant en outre l'étape ci-dessous consistant à :

déterminer (802) le rapport « trafic de liaison montante sur trafic de liaison descendante » de l'équipement d'utilisateur (630).

12. Noeud de réseau (611) d'une cellule de desserte (621) apte à configurer un équipement d'utilisateur (630), desservi par la cellule de desserte (621), avec un ensemble de valeurs d'un paramètre de décalage, en vue de déclencher un transfert intercellulaire vers une cellule voisine (622), dans lequel le noeud de réseau (611) et l'équipement d'utilisateur (630) sont aptes à opérer dans un réseau cellulaire (600), le noeud de réseau (611) comprenant :

une unité de configuration (901) apte à configurer l'équipement d'utilisateur (630) avec l'ensemble de valeurs du paramètre de décalage, l'ensemble de valeurs du paramètre de décalage étant destiné à élargir ou rétrécir une zone de couverture de ladite une parmi la cellule de desserte (621) et la cellule voisine (622), qui est une cellule plus petite, en fonction d'un rapport « trafic de liaison montante sur trafic de liaison descendante » de l'équipement d'utilisateur (630).

13. Équipement d'utilisateur (630) apte à utiliser un ensemble de valeurs d'un paramètre de décalage, l'ensemble étant reçu en provenance d'un noeud de réseau (611), dans lequel l'équipement d'utilisateur (630) est desservi par une cellule de desserte (621) du noeud de réseau (611), et dans lequel le noeud de réseau (611), la cellule de desserte (621) et l'équipement d'utilisateur (630) sont aptes à opérer dans un réseau cellulaire (600), l'équipement d'utilisateur (630) comprenant :

un circuit de réception (1001) apte à recevoir, en provenance du noeud de réseau (611), l'ensemble de valeurs du paramètre de décalage, en vue de déclencher un transfert intercellulaire vers une cellule voisine (622), l'ensemble de valeurs du paramètre de décalage étant destiné à élargir ou à rétrécir une zone de couverture de ladite une parmi la cellule de desserte (621) et la cellule voisine (622), qui est une cellule plus petite, en fonction d'un rapport « trafic de liaison montante sur trafic de liaison descendante » de l'équipement d'utilisateur (630), la cellule voisine (622) opérant dans le réseau cellulaire (600) ; et
un circuit d'utilisation (1003) apte à utiliser l'ensemble de valeurs reçu du paramètre de décalage en vue d'élargir ou de rétrécir la zone de couverture de ladite une parmi la cellule de desserte (621) et la cellule voisine (622), qui est la cellule plus petite, en fonction de la répartition de rapport « trafic de liaison montante sur trafic de liaison descendante » de l'équipement d'utilisateur (630).

14. Support de stockage lisible par ordinateur, dans lequel est stocké un programme informatique comprenant des instructions qui, lorsqu'elles sont exécutées sur au moins un processeur, amènent ledit au moins un processeur à mettre en oeuvre le procédé selon l'une quelconque des revendications 1 à 9.

15. Support de stockage lisible par ordinateur, dans lequel est stocké un programme informatique comprenant des instructions qui, lorsqu'elles sont exécutées sur au moins un processeur, amènent ledit au moins un processeur à mettre en oeuvre le procédé selon l'une quelconque des revendications 10 à 11.

**Figure 1**

**Figure 2**

Macro Pilot
Signal

CRE
Measurement
Offset

Pico Pilot
Signal

Pico eNB

MUE

Macro eNB

CRE Area

# Figure 3

$$S + (H_s - CIO_{s,n})$$

Serving cell (S)

Neighboring cell (N)

Signal Strength

TTT

A          B

Time

# Figure 4

Figure 5

**Figure 6**

Start

701. Configure the UE with the set of values of the offset parameter to expand or shrink the coverage area of the one of the serving cell and the neighbor cell that is the smaller cell, depending on the uplink-downlink traffic ratio of the UE

End

# Figure 7

EP 2 926 593 B1

Start

801. Receive from the network node the set of values of an offset parameter for triggering handover towards the neighbor cell

802. Determine the uplink-downlink traffic ratio of the UE

803. Use the received set of values of the offset parameter to expand or shrink the coverage area of the one of the serving cell and the neighbor cell that is the smaller cell, depending on the uplink-downlink traffic ratio distribution of the UE

End

# Figure 8

Receiving
port
904

Processing
circuit
902

Configuring unit
901

Memory
circuit
903

Sending
Port
905

Network Node 611

Figure 9

Figure 10

| Receiving circuit 1001 | | Receiving port 1006 |
| Determining circuit 1002 | Processing circuit 1004 | Memory circuit 1005 |
| Using circuit 1003 | | Sending Port 1007 |

User Equipment 630

1100
Monitor UL-DL traffic of UE

1102 Traffic predominantly UL?

No

Yes

1104
Adjust CIO used by UE towards pico layer, to shrink CRE area/zone making macro layer more favourable

1106
Adjust CIO used by UE towards pico layer, to expand CRE area/zone making pico layer more favourable

1108
Configure adjusted CIO in UE

Figure 11

1200

Obtain current UL-DL traffic ratio of UE

1202

Adjust offset parameter in margin based
on current UL-DL traffic ratio of UE

1204

Configure adjusted offset parameter in UE

**Figure 12**

**Figure 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009002252 A1